# EUROPÄISCHE PATENTSCHRIFT

(11) **EP 2 994 736 B1**
(45) Veröffentlichungstag und Bekanntmachung des Hinweises auf die Patenterteilung: **10.07.2019**
(21) Anmeldenummer: 14734724.9
(22) Anmeldetag: 05.05.2014
(51) Int. Cl.: G01M 3/20

(54) **DICHTHEITSPRÜFANORDNUNG UND DICHTHEITSPRÜFVERFAHREN**
LEAK TEST ASSEMBLY AND LEAK TESTING METHOD
AGENCEMENT DE CONTRÔLE D'ÉTANCHÉITÉ ET PROCÉDÉ DE CONTRÔLE D'ÉTANCHÉITÉ

(30) Priorität: 07.05.2013 DE 102013104682; 07.05.2013 EP 13166770
(43) Veröffentlichungstag der Anmeldung: 16.03.2016
(73) Patentinhaber: Lüdolph Management GmbH, 27607 Geestland (DE)
(72) Erfinder: LÜDOLPH, Gerald, 27607 Geestland (DE); FUHRMANN, Wolfgang, 28865 Lilienthal (DE)
(74) Vertreter: Hansen, Jochen
(86) Internationale Anmeldenummer: PCT/DE2014/100156
(87) Internationale Veröffentlichungsnummer: WO 2014/180469

(56) Entgegenhaltungen:
- US-A- 4 813 268

## Beschreibung

Die Erfindung betrifft eine Dichtheitsprüfanordnung zur Prüfung eines Strukturbauteils oder einer geschlossenen Verpackung bzw. eines geschlossenen Objektes oder Bauteils mit einer auf Dichtheit zu prüfenden Wandung, aufweisend: eine Testkammer, in der während der Dichtheitsprüfung das Strukturbauteil oder die Verpackung, das geschlossene Objekt oder Bauteil angeordnet ist, einen Testgasraum, der auf einer ersten Seite der Wandung des Strukturbauteils und der Testkammer ausgebildet ist oder der dem Innenraum der Verpackung / des geschlossenen Objektes oder Bauteils entspricht, einen Prüfraum, der auf einer zweiten Seite der Wandung des Strukturbauteils und der Testkammer ausgebildet ist oder zwischen Wandung der Verpackung, des geschlossenen Objektes oder Bauteils und der Testkammer ausgebildet ist, eine Testgaszuführung zur Zuführung von Druckluft und/oder eines Testgases in den Testgasraum, eine Testgasmessanordnung zur Messung oder Detektion des Testgases in dem Prüfraum mit einem Sensorsystem und eine Prüfraum-Vakuumanordnung zur Evakuierung des Prüfraumes.

Ferner betrifft die Erfindung ein Dichtheitsprüfverfahren zur Prüfung eines Strukturbauteils oder einer geschlossenen Verpackung, eines geschlossenen Objektes oder Bauteils mit einer erfindungsgemäßen Dichtheitsprüfanordnung.

Eine Dichtheitsprüfung ist physikalisch gesehen eine Messung der Leckrate, wobei die Dichtheit eines zu prüfenden Objektes unterhalb einer vorgebbaren Leckrate gegeben ist und oberhalb einer vorgegebenen Leckrate die Dichtheit eines zu prüfenden Objektes nicht mehr gegeben ist.

Aus dem Stand der Technik sind unterschiedliche Dichtheitsprüfanordnungen bekannt, um eine industrielle Dichtheitsprüfung von Strukturbauteilen mit einer ersten Seite und einer zweiten Seite durchzuführen, wobei die Dichtheit zwischen der ersten Seite und der zweiten Seite zu prüfen ist. Derartige industrielle Dichtheitsprüfungen werden in der Massenproduktion von Autofelgen, insbesondere Aluminiumrädern, Kälteleitungen, Druck- und Saugleitungen, Wärmetauschern, wie Kühlern und dgl., Pumpengehäusen, Stoßdämpfern sowie Federbeinen und Dämpfern, Kraftstofftanks, Ventilen, Motoren, Armaturen, Leuchtmitteln und dgl., als auch in der Arzneimittelindustrie für Blisterverpackungen, Dosiersprays oder Langzeit-Medikamentverpackungen durchgeführt. Die zuvor aufgeführten Anwendungsbeispiele sind hierbei nicht abschließend zu sehen. Insbesondere ist der Bereich der Luftfahrt-Bauteile-Prüfung ein sehr großes Segment der Dichtheitsprüfung, wobei hier die unterschiedlichsten Bauteile auf Dichtheit geprüft werden können.

Im Bereich der industriellen Dichtheitsprüfung für Aluminiumräder wird praktisch ausnahmslos in entsprechenden Dichtheitsprüfanordnungen eine Dichtheitsprüfung der Aluminiumräder mittels eines Massenspektrometers und dem Testgas Helium durchgeführt. Für die Dichtheitsprüfung einer Autofelge wird der Prüfling produktionsseitig über Fördersysteme der Dichtheitsprüfanordnung zugeführt und über ein Handlingsystem wird der Prüfling innerhalb einer Testkammer der Dichtheitsprüfanordnung positioniert.

Nach der richtigen Positionierung wird die Autofelge, dies können auch Stahlfelgen oder neuartige Carbonfelgen sein, derart abgedichtet, dass die Wandung zwischen dem Innen- und Außenbereich der Autofelge, also die Trennwand bzw. Aufnahme für den später aufzubringenden Reifenmantel, auf Dichtheit prüfbar ist. Nunmehr erfolgt zunächst eine Evakuierung der Räume sowohl auf der Innenseite als auch auf der Außenseite der Autofelge.

Im Anschluss erfolgt eine Druckbeaufschlagung mit einem Testgas auf der einen Seite der Autofelge, bevorzugt der Außenseite, wobei auf der anderen Seite das Vakuum gehalten wird und nach Erreichen des vorbestimmten Druckes eine Ventilschaltung geöffnet wird, so dass eine Gasprobe aus dem Innenraum der Autofelge entnommen werden kann, die im Anschluss dahin gehend geprüft wird, ob das Testgas die Wandung durchdrungen hat und somit Testgas auf der Vakuumseite detektierbar ist. Diese Prüfung wird durch ein Massenspektrometer durchgeführt, wobei die Probe auf definierte Anteile von Helium, die aus einem evtl. vorhandenen Leck in der Wandung der Autofelge durchgetreten sind, untersucht wird.

Über einen entsprechend vorgegebenen Grenzwert erfolgt dann die Sortierung nach Autofelgen, die die notwendige Dichtheit aufweisen und jenen die Undichtigkeiten aufweisen.

Nach der durchgeführten Dichtheitsmessung wird das Testgas Helium entspannt, rückgewonnen und sämtliche Prüfräume werden im Anschluss belüftet. Anschließend erfolgt die Öffnung der Testkammer und es wird ein Radwechsel automatisiert durchgeführt.

Die Druckschrift US 3,762,212 A offenbart eine Dichtheitsprüfanordnung, bei der mittels eines Testgases, welches auf ein in dem System vorhandenes Massenspektrometer abgestimmt ist, eine Leckageprüfung erfolgt, wobei als Testgas bevorzugt Helium verwendet wird, gleichwohl auch andere Testgase verwendet werden können, und diese reinen Testgase bevorzugt mit Luft vermischt werden.

Die Druckschrift US 3,729,984 A zeigt eine Dichtheitsprüfanordnung für Container.

Weiter ist aus der Druckschrift US 3,186,214 A eine Dichtheitsprüfanordnung bekannt, bei der ein Testgas und Druckluft nacheinander in den Testgasraum eingebracht werden.

Aus der Druckschrift US 5,850,036 A ist eine Raddichtheitsprüfanordnung bekannt, bei der eine Prüfung mittels eines Gemisches aus Helium und Druckluft durchgeführt wird und mittels eines Helium Massen-Spektrometers entsprechend ausgewertet wird.

Ferner zeigt die Druckschrift DE 43 20 363 A1 eine Dichtheitsprüfanordnung, bei der Luft als Testgas genommen wird und vor Anwendung in einem Separator aufgetrennt und einzelne Komponenten abgetrennt werden, bevor die verbleibenden Bestandteile zur Testgasbeaufschlagung verwendet werden.

Die Druckschrift US 4,813,268 A offenbart ein Leckerfassungssystem mit einer Testkammer in der ein Rad auf Dichtigkeit geprüft wird, wobei Helium als Testgas in eine Heliumkammer eingeleitet wird und auf der anderen Seite des auf Dichtheit zu prüfenden Rades eine Leckagemessung mittels einer Vakuumanordnung und einem Massenspektrometer erfolgt, wobei die Vakuumleistung einer einzigen Vakuumanordnung über eine Hauptvakuumleitung und einen Vakuumverteiler verteilt wird und die Vakuumzufuhr zu den zu evakuierenden Bereichen über einzelne Ventile erfolgt und die Vakuumleistung derart genutzt wird, dass zunächst eine Evakuierung der Prüfkammer über Hauptvakuumleitung und Vakuumverteiler erfolgt und im Anschluss eine weitere Evakuierung der Prüfkammer über den Vakuumverteiler auf der oberen Seite, wobei bei Erreichen eines definierten Vakuumwertes zum Messen der Dichtigkeit ein Erfassungsventil zu dem Massenspektrometer geöffnet wird.

Die Druckschrift US 3,824,839 A offenbart ein Leckdetektionssystem für offene oder versiegelte Gefäße, bei denen mittels eines Testgases und einem Massenspektrometer eine Dichtheitsprüfung vorgenommen werden soll, wobei mehrere Ventile zwischen dem Testraum und dem Detektionsgerät unterschiedlich große Räume aufspannen, über die die dem Massenspektrometer zuzuführende Testgasmenge begrenzt wird.

Ein Problem an denen im Stand der Technik bekannten Dichtheitsprüfanordnungen zur Prüfung von Strukturbauteilen und geschlossenen Verpackungen sowie geschlossenen Bauteilen auf Dichtheit stellt die Testgasverseuchung der Dichtheitsprüfanordnung durch ein undichtes Strukturbauteil oder einen Mixbetrieb bei der Dichtheitsmessung von unterschiedlich großen zu prüfenden Elementen.

Die Testgasverseuchung durch eine Undichtigkeit in dem Strukturbauteil führt bei den empfindlichen Massenspektrometerprüfmethoden zu erheblichen Testverzögerungen bzw. zu Fehl- bzw. Falschmessungen, insbesondere zu einem Pseudoausschuss und scheint generell nicht beseitigbar zu sein.

Der Pseudoausschuss, nämlich Bauteile, Strukturbauteile, etc. die vollständig in Ordnung sind, jedoch auf Grund einer Testgasverseuchung als nicht in Ordnung gekennzeichnet werden, muss entweder aufwendig erneut geprüft werden, was zu einem erheblichen Eingriff bzw. zu einer zeitlichen Verzögerung führt, oder aber entsprechend den Herstellervorgaben zerstört werden, was wiederum zu einem wirtschaftlichen Nachteil führt, da eine Testgasverseuchung der Dichtheitsprüfanlage nicht unbedingt bereits nach einer weiteren Prüfung verschwunden ist.

Der vorliegenden Erfindung liegt die Aufgabe zugrunde, eine Dichtheitsprüfanordnung sowie ein Dichtheitsprüfverfahren aufzuzeigen, die es ermöglichen, den Pseudoausschuss an geprüften Bauteilen erheblich zu reduzieren, und auf diese Art und Weise die Wirtschaftlichkeit einer Dichtheitsprüfanordnung zu erhöhen.

Gelöst wird diese Aufgabe mit einer Dichtheitsprüfanordnung nach Anspruch 1 sowie einem Dichtheitsprüfverfahren nach Anspruch 4.

Das Sensorsystem weist ein Massenspektrometer, ein Quadrupol-Massenspektrometer und/oder mindestens zwei einzelne Testgassensoren auf, wobei das Sensorsystem der Testgasmessanordnung mindestens zwei Testgase detektieren kann, und die Testgaszuführung mit mindestens zwei unterschiedlichen Testgasen beaufschlagbar ist, wobei entweder das erste Testgas, das zweite Testgas oder eine Kombination aus dem ersten und dem zweiten Testgas in dem Testgasraum einbringbar ist. Durch diese neuartige Ausgestaltung einer Dichtheitsprüfanordnung ist es möglich, die Anlage mit zwei unterschiedlichen Testgasen zu fahren, wobei diese beide detektiert werden.

Für den Fall einer Verseuchung würde im nächsten Vorgang ein anderes Testgas verwendet werden, was somit nicht zu einem Pseudoausschuss des zu testenden Strukturbauteils führen wird. Somit kann das Strukturbauteil ohne Pseudoausschuss geprüft werden und es werden nur noch die tatsächlich undichten Bauteile als NIO, nicht - in -Ordnung gekennzeichnet und entsprechend vernichtet, nachbearbeitet oder dgl, was zu einer immensen Kostenersparnis bei der Herstellung führt, da entweder nur noch so viele Elemente produziert werden, wie benötigt werden oder aber der tatsächliche Produktionsausstoß deutlich, nämlich genau um den Pseudoausschuss erhöht wird.

In einer einfachen Ausgestaltung können einfache Sensoren zur Detektion der Testgase bzw. deren Konzentration in der Luft verwendet werden. Bevorzugt können jedoch Sensorsysteme verwendet werden, die zwei oder mehr Testgase detektieren können.

Es ist eine Mischanordnung zur Mischung des / der Testgase mit Druckluft vor oder in dem Testgasraum vorgesehen, wobei in der Mischanordnung Mittel zur homogenen Mischung des Testgases mit der Druckluft vorgesehen sind, wobei die Testgaszuführung mindestens drei einzelne Einbringmittel aufweist, die direkt in den Testgasraum eindringend oder dort angeordnet sind, wobei ein erstes Einbringmittel mit Druckluft, ein zweites Einbringmittel mit einem ersten Testgas und ein drittes Einbringmittel mit einem zweiten Testgas beaufschlagbar ist.

Hierdurch erfolgt zum einen eine optimale Durchmischung des Testgasdruckluftgemisches innerhalb des Testgasraumes und weiter erfolgt eine sehr gute Regelung und Dosierung der Testgasmenge. Insbesondere kann der Einfüllvorgang während des Tests sehr fein und zudem auch dynamisch dosiert werden, so dass bereits bei einem kleinen Testgasdruck eine empfindliche Grobleckmessung vorgenommen werden kann, um eine Testgasverseuchung bei sehr hohem Testgasdruck zu vermeiden. Das Mischungsverhältnis von Testgas zu Druckluft ist ca. um den Faktor 100 bis 1000 kleiner als das bisherige Mischungsverhältnis von im Stand der Technik bekannten Dichtheitsprüfanordnungen, so dass der Verbrauch an teurem Testgas stark reduziert werden kann.

Diesbezüglich kann eine erste frühe Testgasmessung durch eine kleine Probe am Anfang des Testgasmischvorganges erfolgen, so dass das Sensorsystem, beispielsweise ein Quadrupol-Massenspektrometer bereits frühzeitig eine Grobleckage detektieren kann. Sollte bereits zu Beginn der Grobleckage-Messung ein Leck detektiert werden, kann der weitere Prüfvorgang sofort beendet werden, wodurch Testgas eingespart wird.

Sollte eine Testgasverseuchung der Dichtheitsprüfanordnung durch ein undichtes Strukturbauteil erfolgt sein, so wird einfach bei der nächsten Messung durch entsprechend angesteuerte Steuerventile auf das zweite Testgas umgeschaltet, das dann wiederum durch das Sensorsystem, aufgrund dessen breiten Messbereiches, detektiert werden kann. Die Nutzung des zweiten Testgases erfolgt lediglich so lange, bis die Verseuchung mit dem ersten Testgas nicht mehr im Untergrund zu detektieren ist. Dies kann beispielsweise besonders interessant sein, wenn man ein erstes günstiges Testgas und ein zweites teureres Testgas verwendet.

Die Testgaszuführung ist erfindungsgemäß mit mindestens zwei unterschiedlichen Testgasen beaufschlagbar, wobei entweder das erste Testgas, das zweite Testgas oder eine Kombination aus dem ersten und dem zweiten Testgas nutzbar ist, wobei die Testgase bevorzugt Wasserstoff (H²), besonders bevorzugt als Formiergas, Helium (HE) und/oder Kohlenstoffdioxid (CO²) sind. Hierbei ist deren einfache und kostengünstige Verfügbarkeit der wichtigste und ausschlaggebende Aspekt. Selbstverständlich können auch andere Gase verwendet werden. Es sei noch angemerkt, dass bei Verwendung von Formiergas keinerlei Probleme in Bezug auf eine mögliche Explosionsgefahr bestehen. Die Wasserstoffkonzentration innerhalb eines Druckluft-Testgas-Gemisches mit Basis von Formiergas kann auf Grund der Verwendung eines Quadrupol-Massenspektrometers derart gering gehalten werden, dass sich durch Verwendung von Formiergas keinerlei Probleme ergeben.

Das Sensorsystem weist ein Massenspektrometer, insbesondere ein Quadrupol-Massenspektrometer und/oder mindestens zwei einzelne Testgassensoren auf, wobei das Sensorsystem der Testgasmessanordnung in einer besonders bevorzugten Ausführung mindestens zwei Testgase detektieren kann.

Ein Quadrupol-Massenspektrometer ist ein "Partialdruckmessgerät" für das Feinvakuum, Hochvakuum bzw. Ultrahochvakuum und ist in einer kostengünstigen Variante als Restgasanalysator erhältlich. Quadrupol-Massenspektrometer sind ein häufiger Massenspektrometer-Typ, da die Geräte kompakt und kostengünstig gebaut werden können. Quadrupole sind außerdem schnell genug, um eine schnelle Restgasanalyse durchführen zu können. Gerade in der automatisierten Dichtheitsprüfung ist der Zeitfaktor von besonderer Bedeutung.

Das Quadrupol-Massenspektrometer stellt für diese Aufgabenbereiche einen guten Kompromiss aus Leistungsfähigkeit, Platzaufwand und Anschaffungskosten dar, da hier die Eigenschaften, wie beispielsweise die einfache Art des Scannens über den gesamten Massebereich, die hohe Empfindlichkeit, die hohe Mess- und Wiederholungsrate sowie der große Messbereich und die Kompatibilität zu den allgemeinen vakuumtechnischen Anforderungen wie kleine Abmaße, beliebige Einbauposition und geringe Eigengasabgabe, besonders zum Tragen kommen.

Weiter ist eine Testgasraum-Vorbereitungsanordnung zur Vorbereitung des Testgasraumes zur Aufnahme von Druckluft und/oder Testgases vorgesehen, wobei
- die Testgasraum-Vorbereitungsanordnung eine Testgasraum-Vakuumanordnung zum Evakuieren des Testgasraumes im Falle der Dichtheitsprüfung eines Strukturbauteils
   oder
- ein Vorbereitungsabschnitt, bevorzugt mit einer kontrollierten Atmosphäre, im Falle einer auf Dichtheit zu prüfenden geschlossenen Verpackung / Objektes ist.

Das Dichtheitsprüfverfahren für die nacheinander durchzuführende Reihenprüfung einer Mehrzahl von Strukturbauteilen oder Verpackungen / Objekten mit einer erfindungsgemäßen Dichtheitsprüfanordnung, wobei ein Testgas zur Dichtheitsprüfung in den Testgasraum eingebracht wird und eine Detektion auf das Testgas im Prüfraum durchgeführt wird, wobei
a) bei Detektion des Testgases im Prüfraum das geprüfte Strukturbauteil oder Verpackung / Objekt eine Undichtigkeit aufweist (NIO);
   oder
b) bei fehlender Detektion des Testgases im Prüfraum das geprüfte Strukturbauteil oder Verpackung / Objekt keine Undichtigkeit aufweist (IO);
   umfasst in zeitlicher Überschneidung zur, vor und/oder nach der Dichtigkeitsprüfung eine Detektion / Auswertung auf Verseuchung des Prüfraumes durch das Testgas, wobei im Falle einer Verseuchung des Prüfraumes oder einer festgestellten Undichtigkeit ein Umschalten von einem präferierten Testgas auf ein Ersatztestgas für die nächste durchzuführende Dichtheitsprüfungsmessung erfolgt.

In zeitlicher Überschneidung zur, vor und/oder nach der Dichtigkeitsprüfung erfolgt eine Detektion / Auswertung auf Verseuchung des Prüfraumes durch das präferierte Testgas, wobei im Falle, dass keine Verseuchung des Prüfraumes mehr vorliegt, ein Umschalten von dem Ersatztestgas auf das präferierte Testgas für die nächste durchzuführende Dichtheitsprüfungsmessung erfolgt.

Weiter erfolgt in zeitlicher Überschneidung zur, vor und/oder nach der Dichtigkeitsprüfung eine Detektion / Auswertung auf Verseuchung des Prüfraumes durch das Ersatztestgas und im Falle einer Verseuchung des Prüfraumes oder einer festgestellten Undichtigkeit erfolgt ein Spülen des Prüfraumes und/oder der Testkammer mit Luft und das präferierte Testgas wird bei der nächsten durchzuführenden Dichtheitsprüfung verwendet.

Vor der Zufuhr des Testgases erfolgt eine Detektion auf Verseuchung des Prüfraumes mit dem Testgas, wobei hierzu vor der Zuführung des Testgases der Prüfraum auf Anwesenheit des Testgases geprüft wird und bei Detektion des Testgases auf das andere Testgas für den aktuellen Dichtheitsprüfvorgang umgeschaltet wird.

Sollte eine Verseuchung der Testkammer mit einem der Testgase erfolgt sein, so wird auf das andere Testgas umgeschaltet. Sollte auch eine Verseuchung mit dem anderen Testgas vorliegen und die Verseuchung mit dem ersten Testgas noch nicht vollständig verflogen sein, so erfolgt erfindungsgemäß eine Spülung der Testkammer mit Luft und eine Umschaltung auf das präferierte Testgas.

Eine weitere sich ergebende Teil-Aufgabe der Erfindung ist die Verringerung an Testgas zur Durchführung der Dichtheitsprüfung, so dass der Testgasverbrauch reduziert wird, wodurch weitere erhebliche wirtschaftliche Vorteile entstehen. Diese Aufgabe ist insbesondere im Nachgang zu den bisherigen Ausführungen zu sehen.

Dadurch, dass die Testgasmessanordnung zwischen dem Prüfraum und dem Sensorsystem eine Probenstufe mit einer Zwischenkammer, einem zwischen der Zwischenkammer und dem Prüfraum angeordneten Prüfraum-seitigen Ventil, einem zwischen der Zwischenkammer und dem Sensorsystem angeordneten Sensorsystem-seitigen Ventil, einer an die Zwischenkammer angeschlossene Vakuumanordnung zur Evakuierung der Zwischenkammer und einem zwischen der Zwischenkammer und der Vakuumanordnung angeordneten Vakuumanordnung-seitigen Ventil aufweist, ist es zum einen möglich, ein hochempfindliches

Messinstrument zur Testgasdetektion als Sensorsystem zu verwenden und zum anderen die Zeit für den Messvorgang zu reduzieren, da die Messung noch weiter geführt werden kann, obwohl die Testkammer bereits wieder entspannt und belüftet wird, wodurch insgesamt ein deutlich reduzierter Testgasverbrauch gegenüber dem bisherigen Stand der Technik gegeben ist und die Taktzeiten trotz einer wesentlich empfindlicheren Messung gleich bleibend sind bzw. sogar reduziert werden können, was letztendlich einem höheren Durchsatz gleich kommt.

Mittels der hintereinander geschalteten und in Richtung des Sensorsystems immer geringere Drücke aufweisenden Kammer bzw. Probenabschnitte sowie einer dazugehörigen verfahrensgemäßen Ansteuerung der entsprechenden Ventile ist es durch den sich zwischen den hintereinander geschalteten Stufen ausbildenden Differenzdruckausgleich möglich, die Gasprobe einem hoch sensitiven Sensorsystem zuzuführen. Bei den hintereinander geschalteten Stufen erfolgt eine Reduzierung der Drücke um mehrere Dekaden, so dass von dem anfänglichen Druck des Prüfraums, nämlich einem sehr einfachen Feinvakuum im Bereich von 1 bis 10⁻³ mbar, über das Hochvakuum im Bereich von 10⁻³ mbar bis 10⁻⁶ mbar innerhalb der Probenstufe, bis hin zum Hoch- bis Ultrahochvakuum im Bereich von 10⁻⁴ mbar bis 10⁻⁷ mbar, der Druck der Probe aus dem Prüfraum abnimmt ohne dabei die Probenzusammensetzung wesentlich zu ändern.

Zudem ist mit Hilfe dieser Dichtheitsprüfanordnung eine schnelle Messung möglich, wobei sofort nach der ersten Gasprobennahme in die Zwischenkammer die Testkammer wieder entspannt und belüftet werden kann und ein neues Strukturbauteil bzw. eine geschlossene Verpackung bzw. Bauteil zur Prüfung vorgelegt werden kann.

Die Messempfindlichkeit der Dichtheitsprüfanordnung wird auf Grund der Möglichkeit bessere Sensorsysteme anzuschließen etwa um den Faktor 1.000 erhöht, was dazu führt, dass etwa nur ein hundertstel bzw. bis zu einem tausendstel der ursprünglich benötigten Testgasmenge für die Durchführung der Dichtheitsprüfung notwendig ist. Insbesondere seien hier Quadrupol-Massenspektrometer genannt, wobei auch vergleichbare Spektrometer und Sensoren verwendet werden können.

Das Volumen der Zwischenkammer korreliert mit der Größe des Prüfraumes, wobei das Volumen der Zwischenkammer im Bereich von 1 bis 1.000 cm³, insbesondere im Bereich von 1 bis 150 cm³ liegt. Die Größe der Zwischenkammer ist den Gegebenheiten entsprechend anzupassen, um die notwendige minimale Taktzeit zu realisieren, wobei die Zwischenkammer nicht zu groß aber auch nicht zu klein gewählt werden darf. Insbesondere spielen bei der Größenbestimmung die Leckrate, der Takt sowie die Druckverhältnisse eine wichtige Rolle.

Durch diese im Nachhinein recht einfache Konstruktion und Verbindung eines Quadrupol-Massenspektrometers mit einer Probenstufe mittels Differenzdruckmethode kann nunmehr der Testgasverbrauch erheblich gesenkt werden, da die Detektionsempfindlichkeit drastisch erhöht wird, wodurch insgesamt sich die Kosten, die für die Vorhaltung von Helium als Testgas notwendig sind, um den Faktor 100 bis 1.000 reduzieren lassen.

Der besondere Aspekt, warum diese Kombination aus Probenstufe und Quadrupol-Massenspektrometer hier generell anwendbar ist, ist die Nichtveränderung der Gaszusammensetzung. Das Gas, welches aus dem Prüfraum der Testkammer der Dichtheitsprüfanordnung probenmäßig entnommen wird, wird in dessen Gaszusammensetzung nicht geändert, sondern lediglich in dessen Druck erheblich reduziert und dem Quadrupol-Massenspektrometer zur Analyse zugeführt.

In einer bevorzugten Ausführungsvariante sind alle Vakuum-/ Druckleitungen sehr kurz gehalten, um Prozesszeiten sehr kurz zu halten. Selbstverständlich sind die Volumina der Ventile und der Leitungen entsprechend zu berücksichtigen. Die Vakuumanordnung ist eine Membranpumpe, eine Drehschieberpumpe, und/oder eine Turbomolekularpumpe.

Durch eine Membranpumpe kann kostengünstig und höchst effizient das Vakuum für eine im Anschluss stattfindende Teilübertragung über die Druckdifferenz einer gezogenen Probe realisiert werden, damit im Anschluss die aus der Testkammer stammende Gasprobe zunächst in deren Druck, aber nicht in deren Zusammensetzung verändert und im Anschluss weiter an das Sensorsystem ebenfalls über die Druckdifferenz weiter gegeben wird, wobei die Gasprobe sodann im Sensorsystem analysiert werden kann.

Selbstverständlich kann das System der Probenstufe auch mehrfach hintereinander angewendet werden, wodurch eine mehrstufige Druckreduzierung erfolgt, jedoch sich die Gaszusammensetzung nicht ändert. Insbesondere können auf diese Weise die Probleme einer üblichen Drossel, nämlich Probleme durch Verschmutzung, den langsamen Gasdurchsatz sowie insbesondere die sich ändernde Gaszusammensetzung der gezogenen Probe, ausgeschlossen werden.

Zwischen dem Sensorsystem-seitigen Ventil der Zwischenkammer und dem Sensorsystem kann ergänzend mindestens eine Vakuumerhöhungsstufe angeordnet sein, wobei der Druck der im Sensorsystem zu untersuchenden Gasprobe des Prüfraumes weiter verringert wird.

Das Dichtheitsprüfverfahren für die Prüfung eines Strukturbauteils oder einer geschlossen Verpackung bzw. eines geschlossen Objekts mit einer zuvor dargestellten Dichtheitsprüfanordnung umfasst die Schritte:
1) Evakuieren der Zwischenkammer bei geschlossenem Prüfraum-seitigen Ventil und Sensor-seitigen Ventil durch die Vakuumanordnung bei geöffnetem Vakuumanordnung-seitigen Ventil,
wobei in zeitlicher Überschneidung hierzu erfolgt:
2A) im Falle der Dichtheitsprüfung einer Wandung eines Strukturbauteils:
   a) Positionieren des Strukturbauteils bei offener Testkammer;
   b) Schließen der Testkammer und Abdichten des Strukturbauteils, so dass sich der Testgasraum und der Prüfraum ausbilden;
   c) Evakuieren des Prüfraums und des Testgasraums;
   d) Mischen und Einleiten eines Gasgemisches umfassend Druckluft und/oder ein Testgas in den Testgasraum;
   oder
2B) im Falle der Dichtheitsprüfung einer geschlossenen Verpackung / eines geschlossenen Objekts:
   a) Vorbereiten des Testgasraumes durch Befüllen des Innenraumes der geschlossenen Verpackung / Objekts als Testgasraum mit Druckluft und/oder Testgas
   b) Positionieren der geschlossenen und mit Druckluft und/oder Testgas befüllten Verpackung / Objekts bei offener Testkammer;
   c) Schließen der Testkammer, so dass sich der Prüfraum ausbildet;
   d) Evakuieren des Prüfraums;
3) Schließen des Vakuumanordnung-seitigen Ventils und anschließendes Ziehen einer Probe aus dem Prüfraum über das Druckgefälle eines Teils der Gasprobe durch kurzzeitiges Öffnen und anschließendes Schließen des Prüfraum-seitigen Ventils;
4)
   a) Freigeben eines Teils der oder der in der Zwischenkammer befindlichen Gasprobe des Prüfraumes an das Sensorsystem über das Druckgefälle durch Öffnen des Sensorsystem-seitigen Ventils während des Analysierens der Gasprobe durch das Sensorsystem und Bewertung der Dichtheit des Strukturbauteils oder der geschlossenen Verpackung / Objekts;
      und
   b) in zeitlicher Überschneidung Belüften der Testkammer zur Neubestückung mit dem nächsten Strukturbauteil durch Entfernen des Strukturbauteils oder der geschlossenen Verpackung / Objekts,
   wobei, bevorzugt vor dem Schritt 2A)d) oder 2B)a), eine Detektion des Prüfraumes oder der Testkammer auf Verseuchung mit einem Testgas erfolgt.

Insbesondere besteht hierbei die Möglichkeit kurze Proben zu ziehen und diese unabhängig von der weiteren Befüllung der Testkammer zu analysieren.

Die Öffnungszeit des Prüfraum-seitigen Ventils [Schritt 3] und/oder des Sensorsystem-seitigen Ventils [Schritt 4)a)] durch kurzzeitiges Öffnen und anschließendes Schließen liegt im Bereich von 0,1 bis 9 Sekunden, insbesondere beträgt die Öffnungszeit 0,5 bis 2 Sekunden, da durch dieses kurze Öffnen nur eine sehr begrenzte Menge der Gasprobe durch den Druckdifferenzausgleich überführt wird.

Nach dem Verfahrensschritt 2A) c) oder 2B) d) kann zunächst das Schließen des Vakuumanordnung-seitigen Ventils und anschließend das Ziehen einer Probe aus dem Prüfraum durch kurzzeitiges Öffnen und anschließendes Schließen des Prüfraum-seitigen Ventils erfolgen [Schritt 3], wobei im Anschluss durch Freigeben eines Teils der oder der in der Zwischenkammer befindlichen Gasprobe des Prüfraumes an das Sensorsystem über das Druckgefälle durch Öffnen des Sensorsystem-seitigen Ventils [Schritt 4)a)] eine Gasanalyse der Gasprobe aus dem Prüfraum durch das Sensorsystem auf Verseuchung mit dem Testgas aus der vorherig durchgeführten Dichtheitsprüfung untersucht wird,
wobei bei der Detektion einer Verseuchung des Prüfraumes mit dem ersten Testgas eine Umschaltung der Testgaszuführung auf ein zweites Testgas oder eine Kombination aus dem ersten und zweiten Testgas erfolgt. Es erfolgt somit eine Untersuchung des Untergrundes, wodurch zudem auch eine Kalibrierung realisiert werden kann, die immer von der aktuellen Testatmosphäre abhängig ist und bei der Gasprobenbewertung einbezogen werden kann.

Nach dem Wechsel des Testgases bei einer Testgasverseuchung der Testkammer wird das erste Testgas weiterhin detektiert, wobei bei Unterschreitung einer Verseuchungsgrenze des ersten Testgases erneut auf das erste Testgas umgeschaltet wird. Hierbei können insbesondere kostengünstige Testgase bevorzugt verwendet werden.

Das Mischen und Einleiten des Testgases und der Druckluft in den Testgasraum kann gleichzeitig von Anfang an erfolgen oder aber zeitlich versetzt. Zunächst kann die Druckluft und im Anschluss oder im letzten Drittel der Drucklufteinbringung das Testgas in den Testgasraum eingebracht werden. Hierbei ist es wichtig, dass während der Testgaseinbringung das Testgas ausreichend gut innerhalb des Testgasraumes verteilt wird. Bevorzugt wird das Testgas zuerst in einen zu prüfenden Prüfling eingebracht und erst im Anschluss die Druckluft hinzugefügt, so dass in einem zu Prüfling eine bessere Vermischung erfolgt.

Während der Prüfung auf eine Testgasverseuchung könnte eine Kalibrierung des Untergrundes im Prüfraum erfolgen, wobei die weiteren Auswertungen der Prüfraumproben in Bezug auf eine Undichtigkeit des Strukturbauteils unter Berücksichtigung der Kalibrierung erfolgen. Hierdurch wird die relative Prüfgenauigkeit nochmals deutlich erhöht.

Die Druckluft wird aus der vorhandenen Umgebungsluft erzeugt und ist für die Nutzung als Testgas in Verbindung mit einem Quadrupol-Massenspektrometer möglich.

Nachfolgend werden Ausführungsbeispiele der Erfindung anhand der beiliegenden Zeichnung detailliert beschrieben.

Darin zeigen:
- Fig. 1: eine schematische Darstellung eines ersten Ausführungsbeispiels der erfindungsgemäßen Dichtheitsprüfanordnung am Beispiel eines Aluminiumrades mit einer ersten Variante einer Testgasmessanordnung;
- Fig. 2: eine schematische Darstellung einer weiteren Variante der Testgasmessanordnung zur Detektion entsprechend dem Ausführungs- und Anwendungsbeispiels aus Fig. 1;
- Fig. 3: eine schematische Darstellung eines weiteren Ausführungsbeispiels der erfindungsgemäßen Dichtheitsprüfanordnung am Beispiel eines Aluminiumrades;
- Fig. 4 und 5: eine schematische Darstellung eines Ausführungs- und Anwendungsbeispiels der erfindungsgemäßen Dichtheitsprüfanordnung am Beispiel eines Fasses, das samt einem zum spezifischen Fass dazugehörigen Deckel auf Dichtheit geprüft werden soll, wobei zunächst Fässer mit unterschiedlichen Testgasen gefüllt werden (Fig. 4) und anschließend auf Dichtheit geprüft (Fig. 5) werden, wobei die Fässer in Abhängigkeit einer etwaigen Verseuchung der Anlage zugeführt werden und
- Fig. 6: eine schematische Darstellung eines weiteren Ausführungs- und Anwendungsbeispiels der erfindungsgemäßen Dichtheitsprüfanordnung am Beispiel eines Kühlers bzw. Wärmetauschers.

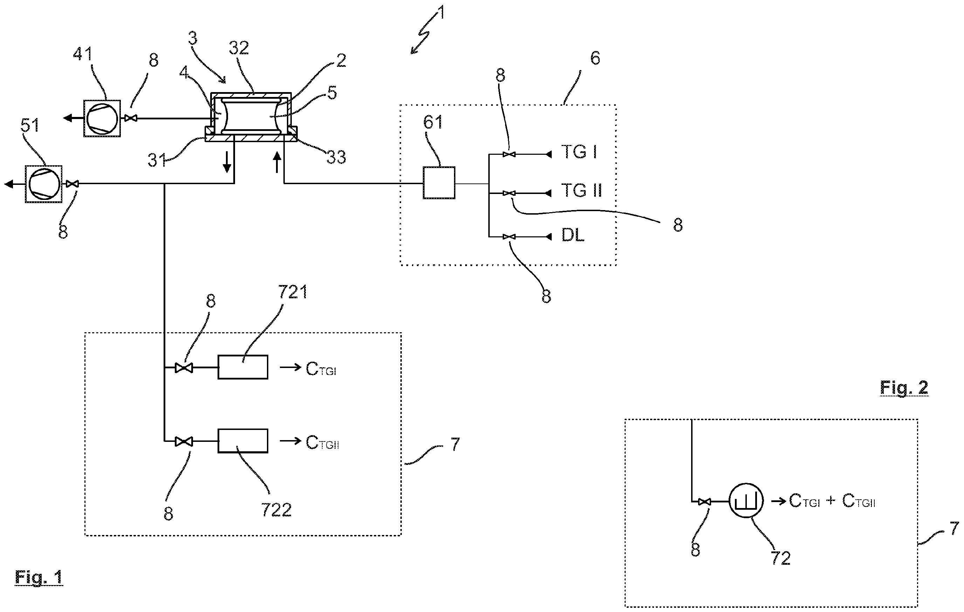

In Fig. 1 ist eine schematische Darstellung eines ersten Ausführungsbeispiels der erfindungsgemäßen Dichtheitsprüfanordnung 1 am Beispiel eines Aluminiumrades 2 mit einer ersten Variante einer Testgasmessanordnung 7.

Die Dichtheitsprüfanordnung 1 besteht aus einer Testkammer 3, einer Testgaszuführung 6 sowie einer Testgasmessanordnung 7. Weiter sind noch Vakuumanordnungen 41 und 51 vorgesehen.

Innerhalb der Testkammer 3 wird das Strukturbauteil / die Autofelge 2 auf einer unteren Dichtplatte 31 automatisiert aufgesetzt. Im Anschluss daran wird die Testkammer 3 mittels der oberen Dichthülle 32, die auf die untere Dichtplatte 31 aufgesetzt und mit Dichtungen 33 abgedichtet wird, verschlossen. Hierbei bildet sich ein Testgasraum 4 und ein Prüfraum 5 aus. Der Testgasraum 4 ist zwischen der Testkammer 3 und der Autofelge 2 realisiert, wobei dies im Wesentlichen dem späteren auf die Autofelge 2 aufzusetzenden Reifenmantel entspricht. Der Prüfraum 5 ist zwischen der unteren Dichtplatte 31 und dem oberen Teil der oberen Dichthülle 32 ausgebildet, wobei dies dem Innenraum der Autofelge 2 entspricht. Die auf Dichtheit zu prüfende Wandung der Autofelge 2 ist somit auf der einen Seite durch den Prüfraum 5 und auf der anderen Seite durch den Testgasraum 4 begrenzt.

Die Testgaszuführung 6 weist mindestens zwei Testgasversorgungen auf, nämlich erstes Testgas TG I, beispielsweise Helium, und zweites Testgas TG II, beispielsweise Wasserstoff oder Kohlenstoffdioxid. Ferner weist die Testgaszuführung 6 noch eine Druckluftversorgung DL auf. Die Druckluft und das Testgas können entweder, wie hier dargestellt, in einer Testgas-/Druckluft-Gasmischanordnung 61 vorgemischt und in den Testgasraum 4 bereits vorgemischt eingebracht werden oder mittels einzelner Zuleitungen und entsprechenden Düsen erst im Testgasraum 4 miteinander vermischt werden, wobei hier das Vermischen dynamisch ablaufen könnte, wobei bereits bei einer frühen Leckdetektion ein unnötiger weiterer Testgasverbrauch vermieden werden könnte.

Die Testgasmessanordnung 7 weist zwei einzelne Sensoren zur Gasdetektion spezifischer Gase auf, nämlich ein erster Sensor 721 zur Detektion des ersten Testgases TG I und einen zweiten Sensor 722 zur Detektion des zweiten Testgases TG II.

Ferner sind in der gesamten Anordnung weitere steuerbare Ventile 8 vorgesehen.

An dieser Stelle wird darauf hingewiesen, dass es sich um eine abstrahierte Prinzipdarstellung eines Ausführungsbeispiels des erfindungsgemäßen Aufbaus der Dichtheitsprüfanordnung 1 handelt, in der die im Stand der Technik bekannten notwendigen Vakuumanordnungen, nämlich insbesondere Testgasraum-Vakuumanordnung 41 als auch Prüfraum-Vakuumanordnung 51 nicht weiter detailliert beschrieben sind, gleichwohl selbstverständlich entsprechend ausgebildet sind. Beispielsweise können hierzu mehrere gleichartige als auch unterschiedliche Vakuumpumpentypen miteinander zusammenwirken oder stufenweise nacheinander geschaltet sein, um ein entsprechend notwendiges Vakuum erzeugen zu können bzw. den Testgasraum 4 sowie den Prüfraum 5 entsprechend zu evakuieren.

Zur Dichtheitsprüfung der auf Dichtheit zu prüfenden Autofelge 2, die sich in der Testkammer 3 befindet, erfolgt zunächst nach dem Einbringen der Autofelge 2 in die Testkammer 3 und dem Schließen der Testkammer 3 das Evakuieren des Testgasraums 4 über die Testgasraumvakuumanordnung 41 und des Prüfraumes 5 über die Prüfraumvakuumanordnung 51. Das Evakuieren der Räume erfolgt in etwa bis in den Bereich 10⁻¹ mbar. Im Anschluss an das Evakuieren wird in den Testgasraum 4 über die Testgaszuführung 6 ein erstes Testgas TG I in Kombination mit Druckluft DL eingebracht.

Nunmehr erfolgt eine Probeentnahme aus dem Prüfraum 5, die dann durch die Sensoren 721 und 722 ausgewertet wird bzw. deren Konzentration detektiert wird.

Auf Basis dieser Dichtheitsprüfung erfolgt die Sortierung der Autofelgen nach Status in Ordnung, falls keine Leckage vorgelegen hat, und nicht in Ordnung, falls eine Leckage vorgelegen hat.

Zur Vermeidung unnötiger Wartezeiten, hervorgerufen durch eine Leckage einer Autofelge 2 und einer dadurch hervorgerufenen Testgasverseuchung mit dem ersten Testgas TG I innerhalb der Testkammer 3, bzw. zur Vermeidung eines Spülens der Testkammer 3, kann nach einem Radwechsel durch entsprechende Umschaltung auf ein zweites Testgas TG II umgeschaltet werden und die nächste Dichtheitsprüfung sofort im Anschluss an den Radwechsel erfolgen.

In Fig. 2 ist eine schematische Darstellung einer weiteren Variante der Testgasmessanordnung zur Detektion entsprechend dem Ausführungs- und Anwendungsbeispiels aus Fig. 1.

Im Gegensatz zu dem Ausführungsbeispiel aus Fig. 1 ist nunmehr Testgasmessanordnung 7 mit einem Quaudrupol-Massenspektrometer 72 ausgestattet, dass die Konzentration bzw. genauer gesagt der Partialdruck einer Zahl von Gasen, unter anderem auch der zu verwendenden Testgase TG I und TG II detektieren kann. Die entsprechende Testgaskonzentration C_{TG}, bzw. Testgaskonzentrationen beider Testgase, wird bei der Messung entsprechend ausgegeben und weiter verarbeitet.

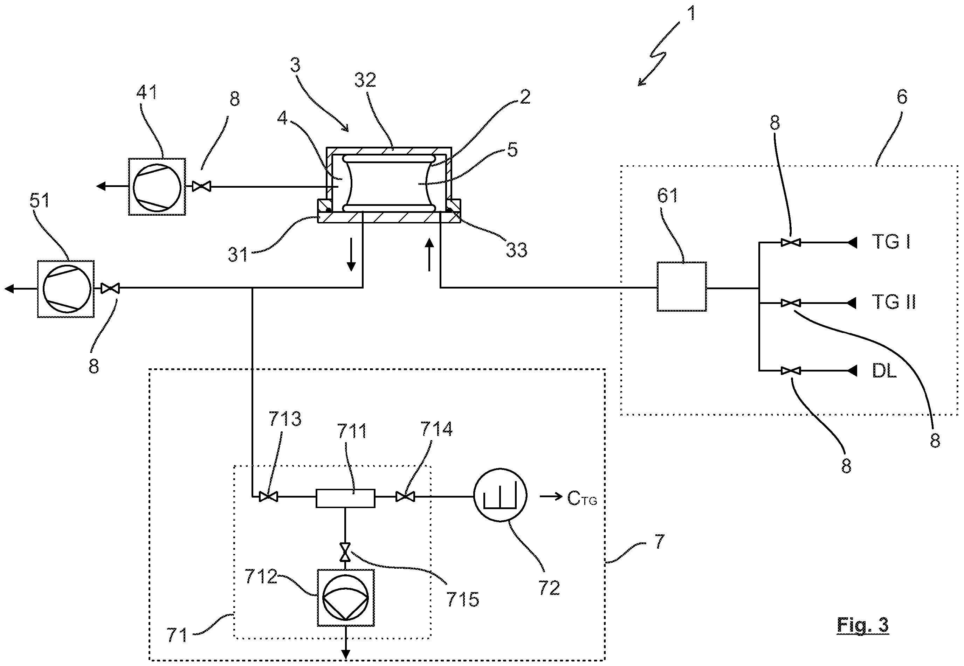

In Fig. 3 ist eine schematische Darstellung eines weiteren Ausführungsbeispiels der erfindungsgemäßen Dichtheitsprüfanordnung 1 am Beispiel eines Aluminiumrades 2 dargestellt.

Zum grundsätzlichen Aufbau wird auf Fig. 1 verwiesen.

Die Testgasmessanordnung 7 weist eine Probenstufe 71 sowie ein Sensorsystem, in diesem Ausführungsbeispiel ein Quadrupol-Massenspektrometer 72 auf.

Die Probenstufe 71 besteht aus einer Zwischenkammer 711 und einer Vakuumanordnung, insbesondere einer Membranpumpe 712, die die Zwischenkammer 711 bis in den Bereich eines Hochvakuums evakuiert. Hierzu sind weiter ein Prüfraum-seitiges Ventil 713 sowie ein Sensorsystem-seitiges Ventil 714 vorgesehen, die die Zwischenkammer 711 entsprechend einerseits von dem Quadrupol-Massenspektrometer 72 und andererseits von dem Prüfraum 5 absperren, während die Zwischenkammer 711 evakuiert wird.

Zur Dichtheitsprüfung der auf Dichtheit zu prüfenden Autofelge 2, die sich in der Testkammer 3 befindet, erfolgt zunächst nach dem Einbringen der Autofelge 2 in die Testkammer 3 und dem Schließen der Testkammer 3 das Evakuieren des Testgasraums 4 über die Testgasraumvakuumanordnung 41 und des Prüfraumes 5 über die Prüfraumvakuumanordnung 51. Das Evakuieren der Räume erfolgt in etwa bis in den Bereich 10⁻¹ mbar. Im Anschluss an das Evakuieren wird in den Testgasraum 4 über die Testgaszuführung 6 ein erstes Testgas TG I in Kombination mit Druckluft DL eingebracht.

Nunmehr erfolgt eine Probeentnahme aus dem Prüfraum 5, die dann der Zwischenkammer 711 durch kurzzeitiges Öffnen und anschließendes Schließen des Prüfraum-seitigen Ventils 713 zugeführt wird, wobei das Vakuumanordnungseitige Ventil 715 geschlossen ist. Dies erfolgt durch die Differenzdruckübertragung, da in das Vakuum in der Zwischenkammer um den Faktor 100 bis 1.000 besser ist als das Vakuum in dem Prüfraum 5.

Nachdem nunmehr der Druck in der Zwischenkammer 711 leicht angestiegen ist, bedingt durch das Eindringen der Gasprobe aus dem Prüfraum, kann nunmehr die in deren Gaszusammensetzung unveränderte Probe des Prüfraumes 5 durch Öffnen des Sensorsystem- / Quadrupol-Massenspektrometer-seitigen Ventiles 714 dem Quadrupol-Massenspektrometer 72 zur Analyse zugeführt werden, wobei hier ebenfalls die Übertragung auf Grund der Druck-Differenz erfolgt, da der im Bereich des Sensorsystems 72 vorherrschende Druck nochmals niedriger ist als der Druck der Zwischenkammer.

Und auch dieses Mal wird nicht der gesamte Inhalt der Zwischenkammer 711 in den Sensorsystembereich übergeleitet, sondern vielmehr nur ein Bruchteil der Gasprobe durch kurzzeitiges Öffnen und anschließendes Schließen des Sensorsystem-seitigen Ventils 714 in das Sensorsystem 72 übergeleitet, wobei sich erneut dessen Zusammensetzung nicht ändert.

Das Quadrupol-Massenspektrometer 72 analysiert die auf nunmehr erhöhtem Vakuumniveau aber mit gleicher Gaszusammensetzung vorliegende Probe des Prüfraumes 5 und gibt ein Ergebnis aus, das den Gehalt an Testgas TG I liefert. Dieses Messergebnis der Konzentration bzw. des Partialdruckes des ersten Testgases TG I in dem Probengas des Prüfraumes 5 wird dazu verwendet, um festzustellen, ob etwas von dem mit hohem Druck im Testgasraum 4 eingebrachten Testgas-/ Druckluft-Gasgemisches durch die auf Dichtheit zu prüfende Autofelge 2 durch ein Leck in den Prüfraum 5 eingedrungen ist. Somit erhält man das Ergebnis, ob das Strukturbauteil, in diesem Fall eine Autofelge 2 an der entsprechend zu prüfenden Stelle die notwendige Dichtheit aufweist.

Auf Basis dieser Dichtheitsprüfung erfolgt die Sortierung der Autofelgen nach Status in Ordnung, falls keine Leckage vorgelegen hat, und nicht in Ordnung, falls eine Leckage vorgelegen hat.

Zur Vermeidung unnötiger Wartezeiten, hervorgerufen durch eine Leckage einer Autofelge 2 und einer dadurch hervorgerufenen Testgasverseuchung mit dem ersten Testgas TG I innerhalb der Testkammer 3, bzw. zur Vermeidung eines Spülens der Testkammer 3, kann nach einem Radwechsel durch entsprechende Umschaltung auf ein zweites Testgas TG II umgeschaltet werden und die nächste Dichtheitsprüfung sofort im Anschluss an den Radwechsel erfolgen.

Insbesondere ist es auch möglich, bereits vor der Testgaszuführung in den Testgasraum 4 eine Probe des Prüfraumes 5 zu ziehen und mit Hilfe der Probenstufe 71 und dem Sensorsystem 72 zu verarbeiten, wobei deren Analyse eine Verseuchung des Prüfraumes 5 mit dem Testgas TG I anzeigen würde und sofort noch vor dem Beginn der Testgasmischung auf ein anderes Testgas TG II umgeschaltet werden könnte. Hierdurch lassen sich Messfehler durch eine Testgasverseuchung effektiv verhindern.

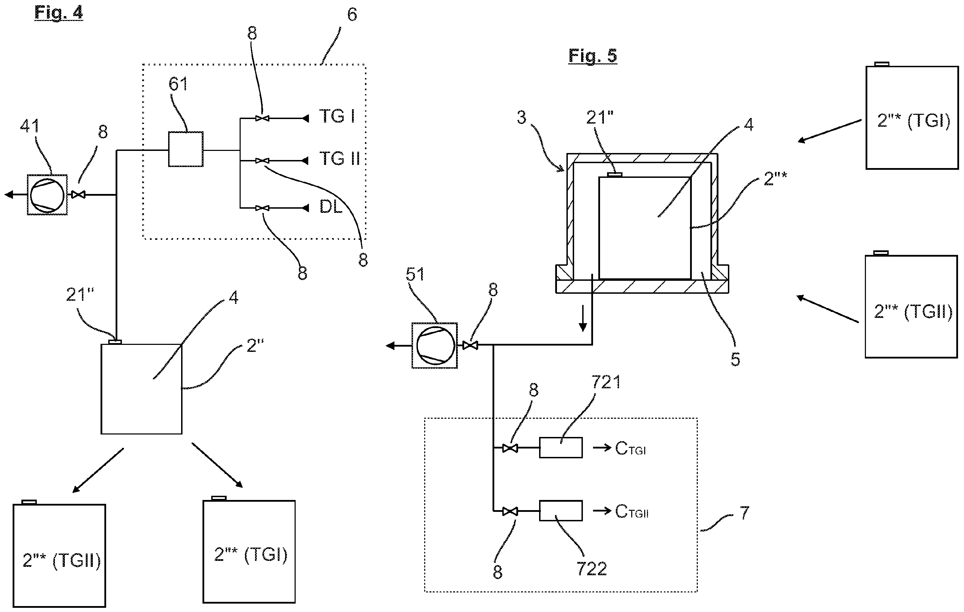

In Fig. 4 und 5 ist eine schematische Darstellung eines weiteren Ausführungs- und Anwendungsbeispiels der erfindungsgemäßen Dichtheitsprüfanordnung 1 am Beispiel eines Fasses 2" gezeigt, das samt einem zum spezifischen Fass 2" dazugehörigen Deckel 21" auf Dichtheit geprüft werden soll, wobei zunächst Fässer 2" mit unterschiedlichen Testgasen TGI, TGII gefüllt (Fig. 4) und anschließend auf Dichtheit geprüft (Fig. 5) werden, wobei die Fässer 2"* in Abhängigkeit einer etwaigen Verseuchung der Anlage zugeführt werden. Die eigentliche Dichtheitsprüfanordnung 1 ist hierzu in zwei Teilabschnitte, entsprechend Fig. 4 und 5, aufgesplittet worden, um auf diese Weise ein Endprodukt, beispielsweise ein Transportfass 2"* mit einem entsprechend dazugehörigen Fassdeckel 21" im Endzustand, also bei verschlossenem spezifischen Fassdeckel 21" auf Dichtheit zu prüfen.

In Fig. 4 wird hierzu das Fass 2" entsprechend evakuiert und mittels Druckluft DL und/oder Testgas TG I, TG II befüllt und nach dem Befüllen mit dem zum Fass 2" gehörenden Fassdeckel 21" verschlossen (2"*).

Das so vorbereitete Fass 2"* wird sodann in der Testkammer 3 entsprechend auf Dichtheit geprüft. Hierzu wird auf die vorherigen Ausführungsbeispiele verwiesen.

Das Befüllen des auf Dichtheit zu prüfenden Objektes mit Druckluft DL und/oder Testgas TG I, TG II kann auch in einer speziellen Atmosphäre erfolgen, so dass das Objekt in einer speziellen Kammer entsprechend gefüllt mit Druckluft DL und/oder Testgas TG I, TG II quasi gefüllt und anschließend auch dort verschlossen wird.

Im Sinne dieser Druckschrift sind ferner Arzneimittelverpackung und dgl. als geschlossene Verpackung 2", 2"* im Sinne des auf Dichtheit zu prüfenden Gegenstandes zu sehen. Derartige Arzneimittelverpackungen, beispielsweise Blister- oder Schweißverpackungen, Dosiersprays oder Langzeit-Medikamentverpackungen können während des Befüllens mit dem Medikament zusätzlich mit Druckluft DL und/oder Testgas TG I, TG II befüllt werden und nach dem Schließen bzw. Versiegeln auf Dichtheit geprüft werden. Hierdurch kann eine lange bzw. längere Haltbarkeit garantiert werden. Ebenso sind bei alleiniger Befüllung des versiegelten Innenraumes der Verpackung mit einem Testgas später Proben auf Dichtheit möglich.

Ferner sind auch Herzschrittmacher und andere vor der Anwendung bzw. Verwendung auf Dichtheit zu prüfende geschlossene Bauteile, Energiequellen und Geräte auf Dichtheit entsprechend prüfbar. Auf diese Weise kann die Dichtheit des Gerätes, beispielsweise eines im menschlichen Körper zu verbauenden Herzschrittmachers, gewährleistet werden.

Bei der Dichtheitsprüfung von medizinischen Geräten oder Arzneimittelverpackungen müssen selbstverständlich für den Körper und die Geräte bzw. Medikamente unschädliche Testgase verwendet werden, so dass bei der späteren Verwendung keine Schädigungen durch das Testgas entstehen können.

Im Sinne eines Strukturbauteils 2 bzw. einer geschlossenen Verpackung, eines geschlossenen Objekts bzw. Bauteils 2", 2"* sind aber auch Kälteleitungen, Druck- und Saugleitungen, Wärmetauschern, wie Kühlern und dgl., Pumpengehäusen, Stoßdämpfern sowie Federbeinen und Dämpfern, Kraftstofftanks, Ventilen, Motoren, Armaturen, Leuchtmitteln und dgl. sowie Luftfahrt-Bauteile zu verstehen, so dass auf diese Elemente ebenfalls die Anordnung bzw. das Verfahren angewandt werden können.

Die Sensoranordnung des Sensorsystems der Testgasmessanordnung 72 besteht in diesem Ausführungsbeispiel aus zwei einzelnen Sensoren, einem ersten Sensor 721 für das erste Testgas TGI und einem zweiten Sensor 722 für das zweite Testgas TGII.

Erfindungsgemäß können diese beiden Sensoren 721 und 722 sowohl gleichzeitig betrieben werden, um so eine etwaige Verseuchung des Untergrundes festzustellen bzw. zu detektieren, ob die Verseuchung wieder verschwunden ist, oder aber einzeln angesteuert werden, was durch die Ventile 8 erfolgen könnte.

Weiter ist die Art der Handhabung und Befüllung der zu auf Dichtheit zu prüfenden Fässer, Verpackungen bzw. geschlossenen Objekte 2", 2"* unterschiedlich. In diesem Ausführungsbeispiel werden einige Objekte 2", 2"* bewusst von Anfang an mit dem zweiten Testgas TGII gefüllt, so dass zunächst die mit dem ersten Testgas TGI gefüllten Objekte 2", 2"* auf Dichtheit geprüft werden.

Jedoch kann beim Auftreten einer etwaigen Verseuchung sofort auf ein mit einem zweiten Testgas gefülltes Objekt 2", 2"* umgeschaltet werden, so dass die Dichtheitsprüfung fortgesetzt werden kann. Sobald die Verseuchung verschwunden ist, können wieder die mit dem ersten Testgas TGI gefüllten Objekte 2", 2"* geprüft werden. Es ist sinnvoll mehr Fässer mit dem ersten günstigen Testgas TG I vorzuhalten als mit dem teureren Testgas TG II.

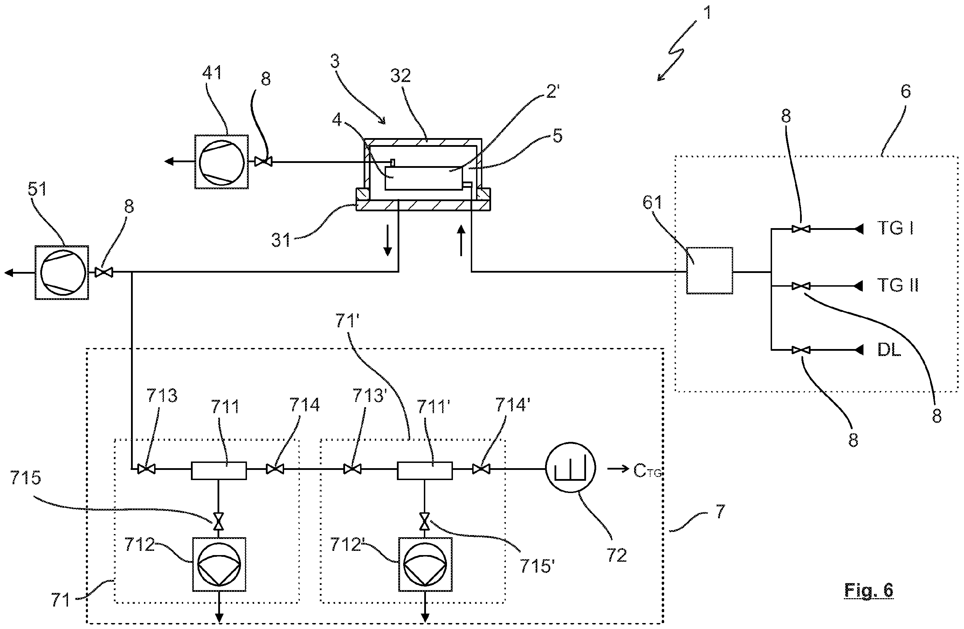

In Fig. 6 ist eine schematische Darstellung eines weiteren Ausführungs- und Anwendungsbeispiels der erfindungsgemäßen Dichtheitsprüfanordnung am Beispiel eines Kühlers bzw. Wärmetauschers gezeigt.

Es wird als Strukturbauteil bzw. als geschlossenes Objekt ein Kühler 2' auf Dichtheit getestet. Hierbei ist an einen der Zu- bzw. Ablaufstutzen die Testgas-Druckluft-Zuführung angeschlossen und der weiteren Zu- bzw. Ablaufstutzen ist hermetisch verschlossen bzw. dort ist die Vakuumleitung der Testgasraum- Vakuumanordnung 41 angeschlossen. Nunmehr bildet sich im Inneren des Kühlers 2' der Testgasraum 4 und im Außenbereich zwischen Kühler 2' und der Testkammer 3 bildet sich der Prüfraum 5 aus.

Selbstverständlich sind sämtliche Werkzeuge zum Abdichten des zu prüfenden Strukturbauteils zu der Testkammer 3 zu zählen.

Zudem sind in diesem Ausführungsbeispiel zwei Probenstufen 71 und 71' zur Verbesserung der Druckniveaus hintereinander geschaltet. Insbesondere wird an dieser Stelle nochmals auf den besonderen Umstand hingewiesen, dass weder Verunreinigungen, Verschmutzungen noch Ablagerungen die Funktionsweise beeinträchtigen können und zudem die Zusammensetzungen der Probengase zu jedem Zeitpunkt konstant ist.

Weitere vorteilhafte Ausgestaltungen können sich zudem aus den Figuren selbst ergeben.

### Bezugszeichenliste

- 1: Dichtheitsprüfanordnung
- 2: Strukturbauteil / Autofelge / Aluminiumrad
- 2': Kühler
- 2": Fass / Verpackung / Objekt
- 2"*: Fass / geschlossene Verpackung / Objekt - gefüllt mit Testgas
- 21": Fassdeckel
- 3: Testkammer
- 31: untere Dichtplatte
- 32: obere Dichthülle
- 33: Dichtung
- 4: Testgasraum
- 41: Testgasraum-Vakuumanordnung
- 5: Prüfraum
- 51: Prüfraum-Vakuumanordnung
- 6: Testgaszuführung
- 61: TG/DL-Gasmischanordnung
- 7: Testgasmessanordnung
- 71, 71': Probenstufe
- 711, 711': Zwischenkammer
- 712, 712': Vakuumanordnung, Membranpumpe
- 713, 713': Prüfraum-seitiges Ventil
- 714, 714': Sensorsystem- / Quadrupol-Massenspektrometer-seitiges Ventil
- 715, 715': Vakuumanordnung-seitiges Ventil
- 72: Sensorsystem / Quadrupol-Massenspektrometer
- 721: erster Sensor
- 722: zweiter Sensor
- 8: steuerbares Ventil
- C_{TG}: Konzentration Testgas
- DL: Druckluft
- TG I: erstes Testgas, He
- TG II: zweites Testgas, CO₂

## Patentansprüche

1. Dichtheitsprüfanordnung (1) für die Prüfung eines Strukturbauteils (2) oder einer geschlossenen Verpackung / Objekts (2"+21", 2"*) mit einer auf Dichtheit zu prüfenden Wandung, aufweisend:
- eine Testkammer (3), in der während der Dichtheitsprüfung das Strukturbauteil (2) oder die Verpackung / Objekt (2"+21", 2"*) angeordnet ist;
- einen Testgasraum (4), der auf einer ersten Seite der Wandung des Strukturbauteils (2) und der Testkammer (3) ausgebildet ist oder der dem Innenraum der Verpackung / des Objekts (2"+21", 2"*) entspricht;
- einen Prüfraum (5), der auf einer zweiten Seite der Wandung des Strukturbauteils (2) und der Testkammer (3) ausgebildet ist oder zwischen der Wandung der Verpackung / Objekt (2"+21", 2"*) und der Testkammer (3) ausgebildet ist;
- eine Testgaszuführung (6) zur Zuführung von Druckluft (DL) und/oder eines Testgases (TG) in den Testgasraum (4);
- eine Testgasmessanordnung (7) zur Messung oder Detektion des Testgases (TG) in dem Prüfraum (5) mit einem Sensorsystem (72);
- eine Prüfraum-Vakuumanordnung (51) zur Evakuierung des Prüfraumes (5);
wobei das Sensorsystem (72) ein Massenspektrometer, ein Quadrupol-Massenspektrometer (72) und/oder mindestens zwei einzelne Testgassensoren (721, 722) aufweist, **dadurch gekennzeichnet, dass** das Sensorsystem (72, 721, 722) der Testgasmessanordnung (7) mindestens zwei Testgase (TG I und TGII) detektieren kann,
und
die Testgaszuführung (6) mit mindestens zwei unterschiedlichen Testgasen (TG I, TG II) beaufschlagbar ist, wobei entweder das erste Testgas (TG I), das zweite Testgas (TG II) oder eine Kombination aus dem ersten (TG I) und dem zweiten Testgas (TG II) in dem Testgasraum (4) einbringbar ist
und
eine Mischanordnung (61) zur Mischung des / der Testgase (TGI, TGII) mit Druckluft (DL) vor oder in dem Testgasraum (4) vorgesehen ist, wobei in der Mischanordnung (61) Mittel zur homogenen Mischung des Testgases (TG I, TG II) mit der Druckluft vorgesehen sind,
wobei die Testgaszuführung (6) mindestens drei einzelne Einbringmittel aufweist, die direkt in den Testgasraum (4) eindringend oder dort angeordnet sind, wobei ein erstes Einbringmittel mit Druckluft (DL), ein zweites Einbringmittel mit einem ersten Testgas (TG I) und ein drittes Einbringmittel mit einem zweiten Testgas (TG II) beaufschlagbar ist, wobei das zweite Einbringmittel mit dem ersten Testgas (TG I) und das dritte Einbringmittel mit dem zweiten Testgas (TG II) umschaltbar sind.

2. Dichtheitsprüfanordnung (1) nach Anspruch 1,
**dadurch gekennzeichnet, dass**
das Testgas (TG I, TG II) Wasserstoff (H²), Helium (HE) und/oder Kohlenstoffdioxid (CO²) ist.

3. Dichtheitsprüfanordnung (1) nach Anspruch 1 oder 2,
**dadurch gekennzeichnet, dass**
eine Testgasraum-Vorbereitungsanordnung zur Vorbereitung des Testgasraumes (4) zur Aufnahme von Druckluft (DL) und/oder Testgases (TG I, TG II) vorgesehen ist, wobei
- die Testgasraum-Vorbereitungsanordnung eine Testgasraum-Vakuumanordnung (41) zum Evakuieren des Testgasraumes (4) im Falle der Dichtheitsprüfung eines Strukturbauteils (2)
oder
- ein Vorbereitungsabschnitt, bevorzugt mit einer kontrollierten Atmosphäre, im Falle einer auf Dichtheit zu prüfenden geschlossenen Verpackung / Objektes (2"+21", 2"*) ist.

4. Dichtheitsprüfverfahren für die nacheinander durchzuführende Reihenprüfung einer Mehrzahl von Strukturbauteilen (2) oder Verpackungen / Objekte (2"+21", 2"*) mit einer Dichtheitsprüfanordnung (1) nach einem der vorangehenden Ansprüche, wobei ein Testgas (TGI / TGII) zur Dichtheitsprüfung in den Testgasraum (4) eingebracht wird und eine Detektion auf das Testgas (TGI / TGII) im Prüfraum (5) durchgeführt wird, wobei:
a) bei Detektion des Testgases (TGI / TGII) im Prüfraum (5) das geprüfte Strukturbauteil (2) oder Verpackung / Objekt (2"+21", 2"*) eine Undichtigkeit aufweist (NIO);
oder
b) bei fehlender Detektion des Testgases (TGI / TGII) im Prüfraum (5) das geprüfte Strukturbauteil (2) oder Verpackung / Objekt (2"+21", 2"*) keine Undichtigkeit aufweist (IO);
**dadurch gekennzeichnet, dass**
in zeitlicher Überschneidung zur, vor und/oder nach der Dichtigkeitsprüfung eine Detektion / Auswertung auf Verseuchung des Prüfraumes (5) durch das Testgas (TGI / TGII) erfolgt und im Falle einer Verseuchung des Prüfraumes (5) oder einer festgestellten Undichtigkeit ein Umschalten von einem präferierten Testgas (TGI) auf ein Ersatztestgas (TGII) für die nächste durchzuführende Dichtheitsprüfungsmessung erfolgt.

5. Dichtheitsprüfverfahren nach Anspruch 4,
**dadurch gekennzeichnet, dass**
in zeitlicher Überschneidung zur, vor und/oder nach der Dichtigkeitsprüfung eine Detektion / Auswertung auf Verseuchung des Prüfraumes (5) durch das präferierte Testgas (TGI) erfolgt und im Falle, dass keine Verseuchung des Prüfraumes (5) mehr vorliegt ein Umschalten von dem Ersatztestgas (TGII) auf das präferierte Testgas (TGI) für die nächste durchzuführende Dichtheitsprüfungsmessung erfolgt.

6. Dichtheitsprüfverfahren nach Anspruch 4 oder 5,
**dadurch gekennzeichnet, dass**
in zeitlicher Überschneidung zur, vor und/oder nach der Dichtigkeitsprüfung eine Detektion / Auswertung auf Verseuchung des Prüfraumes (5) durch das Ersatztestgas (TGII) erfolgt und im Falle einer Verseuchung des Prüfraumes (5) oder einer festgestellten Undichtigkeit ein Spülen des Prüfraumes (5) und/oder der Testkammer (3) mit Luft erfolgt und das präferierte Testgas (TGI) bei der nächsten durchzuführenden Dichtheitsprüfung verwendet wird.

7. Dichtheitsprüfverfahren nach Anspruch 4, 5 oder 6,
**dadurch gekennzeichnet, dass**
vor der Zufuhr des Testgases (TGI / TGII) eine Detektion auf Verseuchung des Prüfraumes (5) mit dem Testgas (TGI / TGII) erfolgt, wobei hierzu vor der Zuführung des Testgases (TGI / TGII) der Prüfraum (5) auf Anwesenheit des Testgases (TGI / TGII) geprüft wird und bei Detektion des Testgases (TGI / TGII) auf das andere Testgas (TGII / TGI) für den aktuellen Dichtheitsprüfvorgang umgeschaltet wird.

8. Dichtheitsprüfverfahren nach einem der Ansprüche 4 bis 7,
**dadurch gekennzeichnet, dass**
die Testgasmessanordnung (7) zwischen dem Prüfraum (5) und dem Sensorsystem (72) eine Probenstufe (71) mit
- einer Zwischenkammer (711),
- einem zwischen der Zwischenkammer (711) und dem Prüfraum (5) angeordneten Prüfraum-seitigen Ventil (713),
- einem zwischen der Zwischenkammer (711) und dem Sensorsystem (72) angeordneten Sensorsystem-seitigen Ventil (714),
- einer an die Zwischenkammer (711) angeschlossene Vakuumanordnung (712) zur Evakuierung der Zwischenkammer (711)
und
- einem zwischen der Zwischenkammer (711) und der Vakuumanordnung (712) angeordneten Vakuumanordnung-seitigen Ventil (715) aufweist,
**wobei** das Dichtheitsprüfverfahren weiter die Schritte umfasst:
1) Evakuieren der Zwischenkammer (711) bei geschlossenem Prüfraum-seitigen Ventil (713) und Sensor-seitigen Ventil (714) durch die Vakuumanordnung (712) bei geöffnetem Vakuumanordnung-seitigen Ventil (715),
wobei in zeitlicher Überschneidung hierzu erfolgt:
2A) im Falle der Dichtheitsprüfung einer Wandung eines Strukturbauteils (2):
a) Positionieren des Strukturbauteils (2) bei offener Testkammer (3);
b) Schließen der Testkammer (3) und Abdichten des Strukturbauteils (2), so dass sich der Testgasraum (4) und der Prüfraum (5) ausbilden;
c) Evakuieren des Prüfraums (5) und des Testgasraums (4);
d) Mischen und Einleiten eines Gasgemisches umfassend Druckluft (DL) und/oder ein Testgas (TG I, TG II) in den Testgasraum (4);
oder
2B) im Falle der Dichtheitsprüfung einer geschlossenen Verpackung / eines geschlossenen Objekts (2"+21", 2"*):
a) Vorbereiten des Testgasraumes (4) durch Befüllen des Innenraumes der geschlossenen Verpackung / Objekts (2"+21", 2"*) als Testgasraum (4) mit Druckluft (DL) und/oder Testgas (TG I, TG II)
b) Positionieren der geschlossenen und mit Druckluft (DL) und/oder Testgas (TG I, TG II) befüllten Verpackung / Objekts (21"*) bei offener Testkammer (3);
c) Schließen der Testkammer (3), so dass sich der Prüfraum (5) ausbildet;
d) Evakuieren des Prüfraums (5);
3) Schließen des Vakuumanordnung-seitigen Ventils (715) und anschließendes Ziehen einer Probe aus dem Prüfraum (5) über das Druckgefälle eines Teils der Gasprobe durch kurzzeitiges Öffnen und anschließendes Schließen des Prüfraum-seitigen Ventils (713);
4)
a) Freigeben eines Teils der oder der in der Zwischenkammer (711) befindlichen Gasprobe des Prüfraumes (5) an das Sensorsystem (72) über das Druckgefälle durch Öffnen des Sensorsystem-seitigen Ventils (714) während des Analysierens der Gasprobe durch das Sensorsystem (72) und Bewertung der Dichtheit des Strukturbauteils (2) oder der geschlossenen Verpackung / Objekts (2"+21", 2"*);
und
b) in zeitlicher Überschneidung Belüften der Testkammer (3) zur Neubestückung mit dem nächsten Strukturbauteil (2) durch Entfernen des Strukturbauteils (2) oder der geschlossenen Verpackung / Objekts (2"+21", 2"*).

9. Dichtheitsprüfverfahren nach einem der Ansprüche 4 bis 8,
**dadurch gekennzeichnet, dass**
bevorzugt vor dem Schritt 2A)d) oder 2B)a), eine Detektion des Prüfraumes (5) oder der Testkammer (3) auf Verseuchung mit einem Testgas (TGI / TGII) erfolgt.

10. Dichtheitsprüfverfahren nach Anspruch 8 oder 9,
**dadurch gekennzeichnet, dass**
nach dem Verfahrensschritt 2A) c) oder 2B) d) zunächst das Schließen des Vakuumanordnung-seitigen Ventils (715) und anschließend das Ziehen einer Probe aus dem Prüfraum (5) durch kurzzeitiges Öffnen und anschließendes Schließen des Prüfraum-seitigen Ventils (713) erfolgt [Schritt 3],
wobei
im Anschluss durch Freigeben eines Teils der oder der in der Zwischenkammer (711) befindlichen Gasprobe des Prüfraumes (5) an das Sensorsystem (72) über das Druckgefälle durch Öffnen des Sensorsystem-seitigen Ventils (714) [Schritt 4)a)] eine Gasanalyse der Gasprobe aus dem Prüfraum (5) durch das Sensorsystem (72) auf Verseuchung mit dem Testgas (TG I) aus der vorherig durchgeführten Dichtheitsprüfung untersucht wird,
wobei
bei der Detektion einer Verseuchung des Prüfraumes (5) mit dem ersten Testgas (TG I) eine Umschaltung der Testgaszuführung (6) auf ein zweites Testgas (TG II) oder eine Kombination (TG I + TG II) aus dem ersten und zweiten Testgas erfolgt,
wobei nach dem Wechsel des Testgases (TG I zu TG II) das erste Testgas (TG I) weiterhin detektiert wird, wobei bei Unterschreitung einer Verseuchungsgrenze des ersten Testgases (TG I) erneut auf das erste Testgas (TG I) umgeschaltet wird.

11. Dichtheitsprüfverfahren nach Anspruch 8 oder 9,
**dadurch gekennzeichnet, dass**
nach dem Verfahrensschritt 2A) c) oder 2B) d) zunächst das Schließen des Vakuumanordnung-seitigen Ventils (715) und anschließend das Ziehen einer Probe aus dem Prüfraum (5) durch kurzzeitiges Öffnen und anschließendes Schließen des Prüfraum-seitigen Ventils (713) erfolgt [Schritt 3],
wobei
im Anschluss durch Freigeben eines Teils der oder der in der Zwischenkammer (711) befindlichen Gasprobe des Prüfraumes (5) an das Sensorsystem (72) über das Druckgefälle durch Öffnen des Sensorsystem-seitigen Ventils (714) [Schritt 4)a)] eine Gasanalyse der Gasprobe aus dem Prüfraum (5) durch das Sensorsystem (72) auf Verseuchung mit dem Testgas (TG I) aus der vorherig durchgeführten Dichtheitsprüfung untersucht wird,
wobei
bei der Detektion einer Verseuchung des Prüfraumes (5) mit dem ersten Testgas (TG I) ein Wechsel der zu prüfenden geschlossenen Verpackungen/Objekte (2"+21", 2"*), jeweils gefüllt mit einem zweiten Testgas (TG II) oder einer Kombination (TG I + TG II) aus dem ersten und zweiten Testgas erfolgt,
wobei nach dem Wechsel der geschlossenen Verpackung/des geschlossenen Objektes (2"+21", 2"*) das erste Testgas (TG I) weiterhin detektiert wird, wobei bei Unterschreitung einer Verseuchungsgrenze des ersten Testgases (TG I) erneut nur noch geschlossene Verpackungen/ geschlossene Objekte (2"+21", 2"*) mit dem ersten Testgas (TG I) der Prüfung zugeführt werden.

## Claims

1. A leak test arrangement (1) for testing a structural component (2) or a closed package / object (2"+21", 2"*) having a wall to be tested for leak-tightness, having:
- a test chamber (3) in which the structural component (2) or the package / object (2"+21", 2"*) is arranged during the leak test;
- a test gas space (4), which is on a first side of the wall of the structural component (2) and the test chamber (3) or which corresponds to the interior of the package / the object (2"+21", 2"*);
- a test space (5), which is on a second side of the wall of the structural component (2) and the test chamber (3) or is between the wall of the package / object (2"+21", 2"*) and the test chamber (3);
- a test gas feed (6) for feeding compressed air (DL) and/or a test gas (TG) into the test gas space (4);
- a test gas measuring arrangement (7) for measuring or detecting the test gas (TG) in the test space (5) using a sensor system (72);
- a test space vacuum arrangement (51) for evacuating the test space (5);
wherein the sensor system (72) has a mass spectrometer, a quadrupole mass spectrometer (72) and/or at least two individual test gas sensors (721, 722), **characterized in that** the sensor system (72, 721, 722) of the test gas measuring arrangement (7) can detect at least two test gases (TG I and TG II),
and
the test gas feed (6) can be supplied with at least two different test gases (TG I, TG II), wherein either the first test gas (TG I), the second test gas (TG II) or a combination of the first (TG I) and the second test gas (TG II) can be introduced in the test gas space (4)
and
there is provided a mixing arrangement (61) for mixing the test gas(es) (TGI, TGII) with compressed air (DL) before or in the test gas space (4), wherein means for the homogenous mixing of the test gas (TG I, TG II) with the compressed air are provided in the mixing arrangement (61),
wherein the test gas feed (6) has at least three individual introduction means which are arranged so as penetrate directly into the test gas space (4) or are arranged in the latter, wherein a first introduction means is supplied with compressed air (DL), a second introduction means with a first test gas (TG I) and a third introduction means with a second test gas (TG II), wherein the second introduction means with the first test gas (TG I) and the third introduction means with the second test gas (TG II) are switchable.

2. A leak test arrangement (1) according to claim 1,
**characterized in that**
the test gas (TG I, TG II) is hydrogen (H²), helium (HE) and/or carbon dioxide (CO²).

3. A leak test arrangement (1) according to claim 1 or 2,
**characterized in that**
a test gas space preparation arrangement for preparation of the test gas space (4) to receive compressed air (DL) and/or test gas (TG I, TG II) is provided, wherein
- the test gas space preparation arrangement is a test gas space vacuum arrangement (41) for evacuation of the test gas space (4) in the case of the leak testing of a structural component (2)
or
- is a preparation portion, preferably with a controlled atmosphere, in the case of a closed package / object (2"+21", 2"*) to be tested for leakage.

4. A leak test procedure for the successive serial testing of a plurality of structural components (2) or packages / objects (2"+21", 2"*) using a leak test arrangement (1) according to any one of the preceding claims, wherein a test gas (TGI / TGII) for leak testing is introduced into the test gas space (4) and detection for the test gas (TGI/TGII) in the test space (5) is carried out, wherein:
a) upon detection of the test gas (TGI / TGII) in the test space (5), the tested structural component (2) or package / object (2"+21", 2"*) has leakage (NIO);
or
b) when no test gas (TGI / TGII) is detected in the test space (5), the tested structural component (2) or package / object (2"+21", 2"*) does not have leakage (10);
**characterized in that**
with temporal overlap, before and/or after the leak test there takes place a detection /evaluation of contamination of the test space (5) by the test gas (TGI / TGII) and in the case of a contamination of the test space (5) or an ascertained leak there takes place a switching from a preferred test gas (TGI) to a substitute test gas (TGII) for the next leak test measurement to be carried out.

5. A leak test procedure according to claim 4,
**characterized in that**
with temporal overlap, before and/or after the leak test there takes place a detection/evaluation for contamination of the test space (5) by the preferred test gas (TGI) and in the case that there is no longer contamination of the test space (5) present there takes place a switching from the substitute test gas (TGII) to the preferred test gas (TGI) for the next leak test measurement to be carried out.

6. A leak test procedure according to claim 4 or 5,
**characterized in that**
with temporal overlap, before and/or after the leak test there takes place a detection/evaluation of contamination of the test space (5) by the substitute test gas (TGII) and in the case of contamination of the test space (5) or an ascertained leak there takes place a purging of the test space (5) and/or the test chamber (3) with air and the preferred test gas (TGI) is used in the next leak test to be carried out.

7. A leak test procedure according to claim 4, 5 or 6,
**characterized in that**
before feeding of the test gas (TGI / TGII) there takes place a detection for contamination of the test space (5) with the test gas (TGI / TGII), wherein for this purpose the test space (5) is tested for presence of the test gas (TGI / TGII) before feeding of the test gas (TGI / TGII) and upon detection of the test gas (TGI / TGII) there is a switch to the other test gas (TGII / TGI) for the current leak test procedure.

8. A leak test procedure according to any one of claims 4 to 7,
**characterized in that**
the test gas measuring arrangement (7) has, between the test space (5) and the sensor system (72), a sample stage (71) with
- an intermediate chamber (711),
- a valve (713), at the test space side, arranged between the intermediate chamber (711) and the test space (5),
- a valve (714), at the sensor system side, arranged between the intermediate chamber (711) and the sensor system (72),
- a vacuum arrangement (712), attached to the intermediate chamber (711), for evacuation of the intermediate chamber (711)
and
- a valve (715), at the vacuum arrangement side, arranged between the intermediate chamber (711) and the vacuum arrangement (712),
wherein the leak test procedure furthermore comprises the steps:
1) evacuation of the intermediate chamber (711) accompanied by closed valve (713) at the test space side and valve (714) at the sensor side by the vacuum arrangement (712) when the valve (715) at the vacuum arrangement side is open,
wherein with temporal overlap there takes place:
2A) in the case of the leak testing of a wall of a structural component (2):
a) positioning of the structural component (2) with open test chamber (3);
b) closure of the test chamber (3) and sealing of the structural component (2), so that the test gas space (4) and the test space (5) are formed;
c) evacuation of the test space (5) and the test gas space (4);
d) mixing and introduction of a gas mixture comprising compressed air (DL) and/or a test gas (TG I, TG II) into the test gas space (4);
or
2B) in the case of the leak testing of a closed package / a closed object (2"+21", 2"*):
a) preparation of the test gas space (4) by filling of the interior of the closed package / object (2"+21", 2"*) as a test gas space (4) with compressed air (DL) and/or test gas (TG I, TG II)
b) positioning of the package / object (21"*), which is closed and filled with compressed air (DL) and/or test gas (TG I, TG II), with open test chamber (3) ;
c) closure of the test chamber (3), so that the test space (5) is formed;
d) evacuation of the test space (5);
3) closure of the valve (715) at the vacuum arrangement side and subsequent sample taking from the test space (5) via the pressure gradient of part of the gas sample through short-duration opening and subsequent closure of the valve (713) at the test space side;
4)
a) release of part of the test-space gas sample or part of the test-space gas sample located in the intermediate chamber (711) to the sensor system (72) via the pressure gradient by opening of the valve (714) at the sensor system side during the analysis of the gas sample by the sensor system (72) and evaluation of the impermeability of the structural component (2) or the closed package / object (2"+21", 2"*);
and
b) in temporal overlap, aeration of the test chamber (3) for re-equipping with the next structural component (2) by removal of the structural component (2) or the closed package / object (2"+21", 2"*).

9. A leak test procedure according to any one of claims 4 to 8,
**characterized in that**
preferably before step 2 A)d) or 2B)a) there takes place detection for contamination of the test space (5) or the test chamber (3) with a test gas (TGI / TGII).

10. A leak test procedure according to claim 8 or 9,
**characterized in that**
after procedure step 2A) c) or 2B) d), there takes place first of all the closure of the valve (715) at the vacuum arrangement side and then sample taking from the test space (5) through short-duration opening and subsequent closure of the valve (713) at the test space side [step 3],
wherein
subsequently through release of part of the test-space gas sample or part of the test-space gas sample located in the intermediate chamber (711) to the sensor system (72) via the pressure gradient by opening of the valve (714) at the sensor system side [step 4)a)], a gas analysis by the sensor system (72) of the gas sample from the test space (5) for contamination with the test gas (TGI) from the previously executed leak test is examined,
wherein
upon detection of contamination of the test space (5) with the first test gas (TG I), switching of the test gas feed (6) to a second test gas (TG II) or a combination (TGI + TG II) of the first and second test gas takes place,
wherein after the change of the test gas (TG I to TG II), the first test gas (TGI) continues to be detected, wherein when there is a fall below a contamination boundary of the first test gas (TGI) there is once again a switch to the first test gas (TG I).

11. A leak test procedure according to claim 8 or 9,
**characterized in that**
after procedure step 2A)c) or 2B)d), there takes place first of all the closure of the valve (715) at the vacuum arrangement side and then sample taking from the test space (5) through short-duration opening and subsequent closure of the valve (713) at the test space side [step 3],
wherein
subsequently through release of part of the test-space gas sample or part of the test-space gas sample located in the intermediate chamber (711) to the sensor system (72) via the pressure gradient by opening of the valve (714) at the sensor system side [step 4)a)], a gas analysis by the sensor system (72) of the gas sample from the test space (5) for contamination with the test gas (TG I) from the previously executed leak test is examined,
wherein
upon detection of contamination of the test space (5) with the first test gas (TG I), a change of the closed packages/objects (2"+21", 2"*) to be tested, in each case filled with a second test gas (TG II) or a combination (TG I + TG II) of the first and second test gas, takes place,
wherein after the change of the closed package/of the closed object (2"+21", 2"*), the first test gas (TG I) continues to be detected, wherein when there is a fall below a contamination boundary of the first test gas (TGI), once again only closed packages/closed objects (2"+21", 2"*) with the first test gas (TGI) are supplied for testing.

## Revendications

1. Dispositif de contrôle de l'étanchéité (1) pour contrôler un composant structurel (2) ou un emballage/objet fermé (2"+21", 2"*) ayant une paroi dont il faut contrôler l'étanchéité, le dispositif comprenant :
- une chambre d'essai (3) dans laquelle le composant structurel (2) ou l'emballage/l'objet (2"+21", 2"*) est disposé durant le contrôle de l'étanchéité ;
- un compartiment de gaz d'essai (4) qui est formé d'un premier côté de la paroi du composant structurel (2) et de la chambre d'essai (3) ou qui correspond à l'espace intérieur de l'emballage/l'objet (2"+21", 2"*) ;
- un compartiment de contrôle (5) qui est formé d'un deuxième côté de la paroi du composant structurel (2) et de la chambre d'essai (3) ou entre la paroi de l'emballage/l'objet (2"+21", 2"*) et de la chambre d'essai (3) ;
- une alimentation en gaz d'essai (6) pour alimenter en air comprimé (DL) et/ou avec un gaz d'essai (TG) le compartiment de gaz d'essai (4) ;
- un dispositif de mesure de gaz d'essai (7) pour mesurer ou détecter le gaz d'essai (TG) dans le compartiment de contrôle (5) au moyen d'un système de capteur (72) ;
- un dispositif de mise sous vide (51) du compartiment de contrôle pour mettre sous vide le compartiment de contrôle (5) ;
le système de capteur (72) comprenant un spectromètre de masse, un spectromètre de masse quadripolaire (72) et/ou au moins capteurs de gaz d'essai (721, 722) distincts, **caractérisé en ce que** le système de capteur (72, 721, 722) du dispositif de mesure de gaz d'essai (7) peut détecter au moins deux gaz d'essai (TGI et TGII),
et
l'alimentation en gaz d'essai (6) peut être alimentée avec au moins deux gaz d'essai différents (TGI, TGII), soit le premier gaz d'essai (TGI), soit le deuxième gaz d'essai (TGII), soit une combinaison du premier gaz d'essai (TGI) et du deuxième gaz d'essai (TGII) pouvant être introduits dans le compartiment de gaz d'essai (4),
et
un dispositif de mélange (61) est prévu pour mélanger le/les gaz d'essai (TGI, TGII) à de l'air comprimé (DL) en amont ou dans le compartiment de gaz d'essai (4), des moyens étant prévus dans le dispositif de mélange (61) pour mélanger de façon homogène le gaz d'essai (TGI, TGII) à l'air comprimé,
l'alimentation en gaz d'essai (6) comprenant au moins trois moyens d'introduction séparés qui pénètrent directement dans le compartiment de gaz d'essai (4) ou y sont disposés, un premier moyen d'introduction pouvant être alimenté par de l'air comprimé (DL), un deuxième moyen d'introduction par un premier gaz d'essai (TGI) et un troisième moyen d'introduction par un deuxième gaz d'essai (TGII),
le deuxième moyen d'introduction avec le premier gaz d'essai (TGI) et le troisième moyen d'introduction avec le deuxième gaz d'essai (TGII) pouvant être permutés.

2. Dispositif de contrôle de l'étanchéité (1) selon la revendication 1,
**caractérisé en ce que**
le gaz d'essai (TGI, TGII) est de l'hydrogène (H₂), de l'hélium (HE) et/ou du dioxyde de carbone (CO₂).

3. Dispositif de contrôle de l'étanchéité (1) selon la revendication 1 ou 2,
**caractérisé en ce que**
un dispositif de préparation du compartiment de gaz d'essai est prévu pour préparer le compartiment de gaz d'essai (4) en vue de recevoir de l'air comprimé (DL) et/ou du gaz d'essai (TGI, TGII), où
- le dispositif de préparation du compartiment de gaz d'essai est un dispositif de mise sous vide (41) du compartiment de gaz d'essai pour mettre sous vide le compartiment de gaz d'essai (4) dans le cas d'un contrôle de l'étanchéité d'un composant structurel (2)
ou
- une section de préparation, de préférence sous atmosphère contrôlée, dans le cas d'un emballage/d'un objet fermé (2"+21", 2"*) dont l'étanchéité est à contrôler.

4. Procédé de contrôle de l'étanchéité pour un contrôle en série à réaliser successivement d'une pluralité de composants structurels (2) ou d'emballages/d'objets (2"+21", 2"*) avec un dispositif de contrôle de l'étanchéité (1) selon l'une des revendications précédentes, un gaz d'essai (TGI / TGII) étant introduit dans le compartiment de gaz d'essai (4) pour contrôler l'étanchéité, et une détection du gaz d'essai (TGI / TGII) étant effectuée dans le compartiment de contrôle (5), procédé dans lequel :
a) le composant structurel (2) ou l'emballage/l'objet (2"+21", 2"*) contrôlé présente un défaut d'étanchéité (NIO) en cas de détection du gaz d'essai (TGI / TGII) dans le compartiment de contrôle (5) ;
ou
b) le composant structurel (2) ou l'emballage/l'objet (2"+21", 2"*) contrôlé ne présente pas de défaut d'étanchéité (IO) en l'absence de détection du gaz d'essai (TGI / TGII) dans le compartiment de contrôle (5) ;
**caractérisé en ce que**
une détection/évaluation de la contamination du compartiment de contrôle (5) par le gaz d'essai (TGI / TGII) est effectuée en chevauchement temporel avec, avant et/ou après le contrôle de l'étanchéité, et en cas de contamination du compartiment de contrôle (5) ou de constatation d'un défaut d'étanchéité, une permutation est réalisée entre un gaz d'essai préféré (TGI) et un gaz d'essai de remplacement (TGII) pour la mesure de contrôle de l'étanchéité suivante à réaliser.

5. Procédé de contrôle de l'étanchéité selon la revendication 4,
**caractérisé en ce que**
une détection/évaluation de la contamination du compartiment de contrôle (5) par le gaz d'essai préféré (TGI) est effectuée en chevauchement temporel avec, avant et/ou après le contrôle de l'étanchéité, et dans le cas où il n'y a plus de contamination du compartiment de contrôle (5), une permutation est réalisée entre le gaz d'essai de remplacement (TGII) et le gaz d'essai préféré (TGI) pour la mesure de contrôle de l'étanchéité suivante à réaliser.

6. Procédé de contrôle de l'étanchéité selon la revendication 4 ou 5,
**caractérisé en ce que**
une détection/évaluation de la contamination du compartiment de contrôle (5) par le gaz d'essai de remplacement (TGII) est effectuée en chevauchement temporel avec, avant et/ou après le contrôle de l'étanchéité, et en cas de contamination du compartiment de contrôle (5) ou de constatation d'un défaut d'étanchéité, un rinçage du compartiment de contrôle (5) et/ou de la chambre d'essai (3) est réalisé avec de l'air, et le gaz de contrôle préféré (TGI) est utilisé pour le contrôle de l'étanchéité suivant à réaliser.

7. Procédé de contrôle de l'étanchéité selon la revendication 4, 5 ou 6,
**caractérisé en ce que**
une détection de la contamination du compartiment de contrôle (5) par le gaz d'essai (TGI / TGII) est effectuée avant l'alimentation en gaz d'essai (TGI / TGII), la présence du gaz d'essai (TGI / TGII) dans le compartiment de contrôle (5) étant pour cela contrôlée avant l'introduction du gaz d'essai (TGI / TGII), et, en cas de détection du gaz d'essai (TGI / TGII), une permutation est effectuée avec l'autre gaz d'essai (TGII / TGI) pour la procédure actuelle de contrôle de l'étanchéité.

8. Procédé de contrôle de l'étanchéité selon l'une des revendications 4 à 7,
**caractérisé en ce que**
le dispositif de mesure de gaz d'essai (7) est muni, entre le compartiment de contrôle (5) et le système de capteur (72), d'un étage d'échantillon (71) avec
- une chambre intermédiaire (711),
- une valve côté compartiment de contrôle (713) disposée entre la chambre intermédiaire (711) et le compartiment de contrôle (5),
- une valve côté système de capteur (714) disposée entre la chambre intermédiaire (711) et le système de capteur (72),
- un dispositif de mise sous vide (712) relié à la chambre intermédiaire (711) pour mettre sous vide la chambre intermédiaire (711), et
- une valve côté dispositif de mise sous vide (715) disposée entre la chambre intermédiaire (711) et le dispositif de mise sous vide (712),
le procédé de contrôle de l'étanchéité comprenant en outre les étapes consistant à :
1) Mettre sous vide la chambre intermédiaire (711) au moyen du dispositif de mise sous vide (712) avec la valve côté compartiment de contrôle (713) et la valve côté capteur (714) fermées et avec la valve côté dispositif de mise sous vide (715) ouverte,
avec en chevauchement temporel avec, avant et/ou après ceci :
2A) dans le cas du contrôle de l'étanchéité d'une paroi d'un composant structurel (2) :
a) positionner le composant structurel (2), la chambre d'essai (3) étant ouverte ;
b) fermer la chambre d'essai (3) et étanchéifier le composant structurel (2) de sorte à former le compartiment de gaz d'essai (4) et le compartiment de contrôle (5) ;
c) mettre sous vide le compartiment de contrôle (5) et le compartiment de gaz d'essai (4) ;
d) mélanger et introduire un mélange gazeux comprenant de l'air comprimé (DL) et/ou un gaz d'essai (TGI, TGII) dans le compartiment de gaz d'essai (4) ;
ou
2B) dans le cas du contrôle de l'étanchéité d'un emballage/d'un objet fermé (2"+21", 2"*) :
a) préparer le compartiment de gaz d'essai (4) en remplissant avec de l'air comprimé (DL) et/ou du gaz d'essai (TGI, TGII) l'espace intérieur de l'emballage/l'objet fermé (2"+21", 2"*) servant de compartiment de gaz d'essai (4)
b) positionner l'emballage/l'objet (21"*) fermé et rempli d'air comprimé (DL) et/ou de gaz d'essai (TGI, TGII), la chambre d'essai (3) étant ouverte ;
c) fermer la chambre d'essai (3) de sorte à former le compartiment de contrôle (5) ;
d) mettre sous vide le compartiment de contrôle (5) ;
3) Fermer la valve côté dispositif de mise sous vide (715) et prélever ensuite un échantillon dans le compartiment de contrôle (5) par différence de pression d'une partie de l'échantillon gazeux en ouvrant brièvement puis en refermant la valve côté compartiment de contrôle (713) ;
4)
a) transmettre au système de capteur (72) l'échantillon gazeux ou une partie de l'échantillon gazeux provenant du compartiment de contrôle (5) et se trouvant dans la chambre intermédiaire (711) par différence de pression en ouvrant la valve côté système de capteur (714) durant l'analyse de l'échantillon gazeux par le système de capteur (72), et évaluer l'étanchéité du composant structurel (2) ou de l'emballage/l'objet fermé (2"+21", 2"*) ;
et
b) en chevauchement temporel, purger la chambre d'essai (3) pour la recharger avec le composant structurel (2) suivant en enlevant le composant structurel (2) ou l'emballage/l'objet fermé (2"+21", 2"*).

9. Procédé de contrôle de l'étanchéité selon l'une des revendications 4 à 8,
**caractérisé en ce que**
une détection de la contamination du compartiment de contrôle (5) ou de la chambre d'essai (3) par un gaz d'essai (TGI / TGII) est effectuée, de préférence avant l'étape 2A)d) ou 2B)a).

10. Procédé de contrôle de l'étanchéité selon la revendication 8 ou 9,
**caractérisé en ce que,**
après l'étape de procédé 2A)c) ou 2B)d), la valve côté dispositif de mise sous vide (715) est tout d'abord fermée, puis un échantillon est prélevé dans le compartiment de contrôle (5) en ouvrant brièvement puis en refermant la valve côté compartiment de contrôle (713) [étape 3], dans lequel
à la suite, une analyse du gaz de l'échantillon gazeux provenant du compartiment de contrôle (5) est réalisée par le système de capteur (72) pour détecter une contamination par le gaz d'essai (TGI) du contrôle de l'étanchéité précédemment réalisé en transmettant l'échantillon gazeux ou une partie de l'échantillon gazeux provenant du compartiment de contrôle (5) et se trouvant dans la chambre intermédiaire (711) au système de capteur (72) par différence de pression en ouvrant la valve côté système de capteur (714) [étape 4)a)],
dans lequel
en cas de détection d'une contamination du compartiment de contrôle (5) par le premier gaz d'essai (TGI), une permutation de l'alimentation en gaz d'essai (6) est réalisée avec un deuxième gaz d'essai (TGII) ou une combinaison (TGI + TGII) du premier et du deuxième gaz d'essai,
le premier gaz d'essai (TGI) continuant à être détecté après le changement de gaz d'essai (TGI à TGII), le premier gaz d'essai (TGI) étant à nouveau permuté lorsqu'on repasse en dessous d'un seuil de contamination du premier gaz d'essai (TGI).

11. Procédé de contrôle de l'étanchéité selon la revendication 8 ou 9,
**caractérisé en ce que,**
après l'étape de procédé 2A)c) ou 2B)d), la valve côté dispositif de mise sous vide (715) est tout d'abord fermée, puis un échantillon est prélevé dans le compartiment de contrôle (5) en ouvrant brièvement puis en refermant la valve côté compartiment de contrôle (713) [étape 3],
dans lequel
à la suite, une analyse du gaz de l'échantillon gazeux provenant du compartiment de contrôle (5) est réalisée par le système de capteur (72) pour détecter une contamination par le gaz d'essai (TGI) du contrôle de l'étanchéité précédemment réalisé en transmettant l'échantillon gazeux ou une partie de l'échantillon gazeux provenant du compartiment de contrôle (5) et se trouvant dans la chambre intermédiaire (711) au système de capteur (72) par différence de pression en ouvrant la valve côté système de capteur (714) [étape 4)a)],
dans lequel,
en cas de détection d'une contamination du compartiment de contrôle (5) par le premier gaz d'essai (TGI), un échange des emballages/objets fermés (2"+21", 2"*) à contrôler est réalisé, rempli avec un deuxième gaz d'essai (TGII) ou une combinaison (TGI + TGII) du premier et du deuxième gaz d'essai,
le premier gaz d'essai (TGI) continuant à être détecté après le changement de l'emballage/l'objet fermé (2"+21", 2"*), seuls des emballages/objets fermés (2"+21", 2"*) avec le premier gaz d'essai (TGI) étant à nouveau amenés au contrôle lorsqu'on repasse en dessous d'un seuil de contamination du premier gaz d'essai (TGI).
